(19) **Europäisches Patentamt**
**European Patent Office**
**Office européen des brevets**

(11) **EP 4 054 134 A1**

(12) **EUROPEAN PATENT APPLICATION**
published in accordance with Art. 153(4) EPC

(43) Date of publication:
**07.09.2022 Bulletin 2022/36**

(21) Application number: **20895560.9**

(22) Date of filing: **07.09.2020**

(51) International Patent Classification (IPC):
***H04L 12/801*** (2013.01)

(52) Cooperative Patent Classification (CPC):
**H04L 47/10**

(86) International application number:
**PCT/CN2020/113775**

(87) International publication number:
**WO 2021/109661 (10.06.2021 Gazette 2021/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **03.12.2019 CN 201911223339**

(71) Applicant: **Huawei Technologies Co., Ltd.
Shenzhen, Guangdong 518129 (CN)**

(72) Inventors:
• **YAN, Siyu
Shenzhen, Guangdong 518129 (CN)**
• **ZHENG, Xiaolong
Shenzhen, Guangdong 518129 (CN)**
• **DENG, Weishan
Shenzhen, Guangdong 518129 (CN)**
• **XIA, Yinben
Shenzhen, Guangdong 518129 (CN)**

(74) Representative: **MERH-IP Matias Erny Reichl
Hoffmann
Patentanwälte PartG mbB
Paul-Heyse-Strasse 29
80336 München (DE)**

(54) **CONGESTION CONTROL METHOD AND RELEATED DEVICE**

(57) Embodiments of this application provide a congestion control method that can be applied to the field of network control. The method in embodiments of this application includes: obtaining a first traffic characteristic, where the first traffic characteristic includes statistical information generated when a first device forwards traffic in a first period based on a first congestion control parameter, and the first congestion control parameter is obtained according to a first congestion control rule; obtaining a first reward value based on the first traffic characteristic; modifying the first congestion control parameter by using a first step, to obtain a second congestion control parameter; obtaining a second traffic characteristic, where the second traffic characteristic includes statistical information generated when the first device forwards traffic in a second period based on the second congestion control parameter; obtaining a second reward value based on the second traffic characteristic; and performing corresponding processing if the second reward value is greater than the first reward value. In embodiments of this application, the second congestion control parameter that is superior to the first congestion control parameter can be obtained, so that scenario generalization of the first congestion control rule can be improved.

FIG. 2

## Description

This application claims priority to Chinese Patent Application No. 201911223339.7 filed with the China National Intellectual Property Administration on December 3, 2019 and entitled "CONGESTION CONTROL METHOD AND RELATED DEVICE", which is incorporated herein by reference in its entirety.

## TECHNICAL FIELD

Embodiments of this application relate to the field of network control, and in particular, to a congestion control method and a related device.

## BACKGROUND

Currently, network technologies such as the Transmission Control Protocol (transmission control protocol, TCP) and remote direct memory access (remote direct memory access, RDMA) are widely used in the network field. These network technologies have higher requirements for congestion indicators of network devices, where the congestion indicators mainly include a latency, a throughput, and the like.

To control congestion indicators of a network device, the network device sets congestion control parameters to control traffic. The congestion control parameters may be obtained by using an artificial intelligence (artificial intelligence, AI) model installed on the network device. The AI model may be obtained by training an initial AI model with a large quantity of historical traffic characteristics. A process of obtaining the congestion control parameters by using the AI model is as follows. The network device collects traffic characteristics of the network device, such as an egress forwarding rate and a queue depth. The network device transmits the collected traffic characteristics to the AI model for online inference. The AI model outputs the congestion control parameters to a forwarding chip of the network device based on the traffic characteristics. Then, the forwarding chip controls the traffic of the network device based on the obtained congestion control parameters.

Generally, the AI model is obtained through training with a large quantity of historical traffic characteristics. If scenarios of the historical traffic characteristics are not extensive enough, the limited scenarios of the historical traffic characteristics cannot cover all traffic scenarios. As a result, the congestion control parameters output by the AI model cannot meet requirements. Therefore, the AI model has low adaptability, or the AI model is not adaptable. That is, a problem of scenario generalization occurs.

## SUMMARY

Embodiments of this application provide a congestion control method and a related device, to improve scenario generalization of a congestion control rule.

A first aspect of the embodiments of this application provides a congestion control method.

A first congestion control rule is configured for a network device. The network device may obtain a first congestion control parameter according to the first congestion control rule. After a first device forwards traffic based on the first congestion control parameter, the network device may obtain a first traffic characteristic, where the first traffic characteristic includes statistical information generated when the first device forwards the traffic in a first period based on the first congestion control parameter. The network device may obtain a first reward value based on the obtained first traffic characteristic. After the network device obtains the first congestion control parameter according to the first congestion control rule, the network device modifies the first congestion control parameter by using a first step, to obtain a second congestion control parameter, where the second congestion control parameter is not equal to the first congestion control parameter because the first step is not equal to 0. After the first device forwards traffic based on the second congestion control parameter, the network device may obtain a second traffic characteristic, where the second traffic characteristic includes statistical information generated when the first device forwards the traffic based on the second congestion control parameter in a second period. The network device may obtain a second reward value based on the obtained second traffic characteristic. The network device may determine whether the second reward value is greater than the first reward value. If the network device determines that the second reward value is greater than the first reward value, the network device performs corresponding processing.

In this embodiment of this application, after the first congestion control parameter is obtained according to the first congestion control rule, the network device may obtain the first traffic characteristic, where the first traffic characteristic includes the statistical information generated when the first device forwards the traffic in the first period based on the first congestion control parameter, and the first congestion control parameter is obtained according to the first congestion control rule. The network device may obtain the first reward value based on the first traffic characteristic. After the first congestion control parameter is modified by using the first step, the network device may obtain the second congestion control parameter. The network device may further obtain the second traffic characteristic, where the second traffic characteristic includes the statistical information generated when the first device forwards the traffic in the second period based on the second congestion control parameter. The network device may obtain the second reward value based on the second traffic characteristic. If the second reward value is greater than the first reward value, the network device performs the corresponding processing. The network device modifies the first congestion control parameter by using the first step, and obtains the second congestion control parameter based on which a larger reward value is obtained. Because the second reward value is greater than the first reward value, the second congestion control parameter is superior to the first congestion control parameter. In this case, the network device optimizes an inference result that is obtained according to the first congestion control rule. Therefore, scenario generalization of the first congestion control rule is improved.

In a possible design, before the network device modifies the first congestion control parameter by using the first step, to obtain the second congestion control parameter, the network device may obtain a first running value and a second running value of the first device, where the first running value is a running value of the first device in a target period, and the second running value is a running value of the first device in a period before the target period. The network device may further obtain a target threshold, where the target threshold is a preset value. The network device determines whether an absolute value of a difference between the first running value and the second running value is less than the target threshold. Only when the absolute value of the difference between the first running value and the second running value is less than the target threshold, the network device performs the step of modifying the first congestion control parameter by using the first step, to obtain the second congestion control parameter. The target period is a period before the first period.

In this embodiment of this application, before the network device modifies the first congestion control parameter by using the first step, to obtain the second congestion control parameter, the network device first determines whether the first congestion control parameter needs to be modified by using the first step. The network device determines, by determining whether traffic forwarded by the first device gradually becomes stable, whether the first congestion control parameter needs to be modified by using the first step. A method for determining, by the network device, whether the traffic forwarded by the first device gradually becomes stable is as follows. The network device obtains first running values and second running values of the first device in different periods. The network device determines whether an absolute value of a difference between the first running value and the second running value is less than a target threshold. When the absolute value of the difference between the first running value and the second running value is less than the target threshold, the network device determines that the traffic forwarded by the first device gradually becomes stable. In this way, the network device determines that the first congestion control parameter needs to be modified by using the first step. The network device determines, by determining whether the traffic forwarded by the first device gradually becomes stable, whether the first congestion control parameter needs to be modified by using the first step because when the traffic forwarded by the first device gradually becomes stable, a result of subsequent modification to the first congestion control parameter by the network device is accurate. To be specific, the result that the network device may determine that the second reward value is greater than the first reward value is obtained because the network device modifies the first congestion control parameter by using the first step. On the contrary, when the traffic forwarded by the first device fluctuates greatly, even if it is actually advantageous for the network device to modify the first congestion control parameter by using the first step, that is, the second congestion control parameter is superior to the first congestion control parameter, because the traffic forwarded by the first device fluctuates greatly, the second reward value may be less than the first reward value, which leads to the network device making a misjudgment. Accuracy of the solution can be improved by using the method in which the network device determines, by determining whether the traffic forwarded by the first device gradually becomes stable, whether the first congestion control parameter needs to be modified by using the first step.

In a possible design, the network device may adjust an initial congestion control parameter only according to the first congestion control rule, where the adjusting the initial congestion control rule only according to the first congestion control rule means that the network device adjusts, not by using a step, a congestion control parameter that is obtained by the network device according to the first congestion control rule, and the network device directly uses the congestion control parameter that is obtained according to the first congestion control rule as a parameter for the first device to control traffic forwarding. Before the network device modifies the first congestion control parameter by using the first step, to obtain the second congestion control parameter, the network device may count a quantity of consecutive adjustments to the initial congestion control parameter by the network device only according to the first congestion control rule. Only when the quantity of consecutive adjustments is greater than a specified threshold N, the network device modifies the first congestion control parameter by using the first step. Correspondingly, the first congestion control parameter is obtained by adjusting the initial congestion control parameter for N+1 consecutive times according to the first congestion control rule.

In this embodiment of this application, before the network device modifies the first congestion control parameter by using the first step, to obtain the second congestion control parameter, the network device may count the quantity of consecutive adjustments to the initial congestion control parameter made by the network device only according to the first congestion control rule. When the quantity of consecutive adjustments is greater than the specified threshold N, the network device may modify the first congestion control parameter by using the first step. When the network device obtains the congestion control parameter according to the first congestion control rule, not each modification to the congestion control parameter by the network device uses the step. Therefore, the network device may adjust, not by using a step, the congestion control parameter that is obtained by the network device according to the first congestion control rule. Instead, the congestion control parameter that is obtained according to the first congestion control rule is directly used as the parameter for the first device to control traffic forwarding. However, a determining mechanism of the network device may not be perfect. The determining mechanism of the network device is a selecting condition for the network device to determine whether to use the congestion control parameter that is obtained through modification by using the step as the parameter for the first device to control traffic forwarding or directly use the congestion control parameter that is obtained according to the first congestion control rule as the parameter for the first device to control traffic forwarding. If the determining mechanism of the network device is not perfect, the network device may continuously determine to directly use the congestion control parameter that is obtained according to the first congestion control rule as the parameter for the first device to control traffic forwarding, and does not select the congestion control parameter that is obtained through modification by using the step as the parameter for the first device to control traffic forwarding, in other words, the step of modifying, by the network device, the first congestion control parameter by using the first step, to obtain the second congestion control parameter is not performed. When the network device determines that the quantity of consecutive adjustments is greater than the specified threshold N, the network device may modify the first congestion control parameter by using the first step, to obtain the second congestion control parameter. In this way, a probability that the network device uses the congestion control parameter that is obtained through modification by using the step as the parameter for the first device to control traffic forwarding is increased. Therefore, a probability that the network device optimizes the first congestion control parameter is increased, and generalization of the first congestion control rule is improved.

In a possible design, the first congestion control rule is a first formula, and the first formula is $Q=F(A, B)$, where Q is a congestion control parameter, A is a rate, B is a specified latency, and $F(A, B)$ is a function related to A and B.

In this embodiment of this application, the first congestion control rule is specifically limited to the first formula, and some parameters in the formula are specifically limited, where A is the rate, B is the specified latency, B is a preset value, and A is a rate obtained by the network device. The network device may obtain the congestion control parameter by substituting an obtained rate and the specified latency according to the first formula. When the obtained rate changes, the congestion control parameter may also change accordingly. In this way, the network device obtains different congestion control parameters based on different rates, that is, dynamical control of forwarded traffic by the first device is achieved. Therefore, feasibility of the solution is improved.

In a possible design, the first formula is $Q=A*B$.

In this embodiment of this application, a relationship between A and B is specifically limited, which improves feasibility of the solution.

In a possible design, when the second reward value is greater than the first reward value, the network device modifies the first formula by using the first step, to obtain a second formula.

In this embodiment of this application, after the modifying, by the network device, the first congestion control parameter by using the first step, to obtain the second congestion control parameter, the network device determines that the second reward value is greater than the first reward value, that is, the second congestion control parameter is superior to the first congestion control parameter. Therefore, the network device modifies the first congestion control rule by using the first step. After the network device determines that the second congestion control parameter is superior to the first congestion control parameter, the network device modifies the first formula by using the first step. The network device not only optimizes the first congestion control parameter that is obtained according to the first congestion control rule, but also optimizes the first congestion control rule. Therefore, generalization of the first congestion control rule is essentially improved.

In a possible design, the network device obtains a third congestion control parameter based on the obtained second traffic characteristic according to the second formula, where the third congestion control parameter is used by the first device to control traffic forwarding.

In this embodiment of this application, after the network device modifies the second formula by using the first step, the network device may obtain the third congestion control parameter based on the second traffic characteristic according to the second formula. The third congestion control parameter may be used to control the traffic forwarded by the first device. The network device obtains the third congestion control parameter according to the second formula. To be specific, the network device replaces the first formula with the second formula, and the second formula is obtained by optimizing the first formula. Therefore, a congestion indicator of the first device is improved, and generalization of the first formula is improved.

In a possible design, the first step is a percentage.

In this embodiment of this application, the first step is a percentage. Because a value of the first congestion control parameter may change greatly in different traffic models, if the first step is a specific value, for example, 20, when the first congestion control parameter is 1000, modification to the first congestion control parameter by using the first step is small; and when a range of the first congestion control parameter is 0 to 30, the first congestion control parameter is 10, and the first step is 20, modification to the first congestion control parameter by using the first step is large. Therefore, the first step may be a percentage, to eliminate interference caused by a change in the first congestion control parameter. In this case, in actual application, the first step may be applied to different first congestion control parameters. Therefore, adaptability of the solution in different scenarios is improved, that is, generalization of the solution is improved.

In a possible design, the second formula is Q=A*B*(1+C), where C is the first step.

In this embodiment of this application, the second formula is specifically limited to Q=A*B*(1+C), where C is the first step. Therefore, feasibility of the solution is improved.

In a possible design, after the network device determines that the second reward value is greater than the first reward value, the network device modifies the second congestion control parameter by using a second step, to obtain the third congestion control parameter. After the first device forwards the traffic based on the third congestion control parameter, the network device may obtain a third traffic characteristic, where the third traffic characteristic includes statistical information generated when the first device forwards the traffic in a third period based on the third congestion control parameter. The network device may obtain a third reward value based on the obtained third traffic characteristic.

In this embodiment of this application, after the network device determines that the second reward value is greater than the first reward value, that is, after the network device determines that the second congestion control parameter is superior to the first congestion control parameter, the network device forward modifies the second congestion control parameter by using the second step, to obtain the third congestion control parameter. The second congestion control parameter is superior to the first congestion control parameter. After the network device obtains the second congestion control parameter that is superior to the first congestion control parameter, because the second congestion control parameter may not be the optimal congestion control parameter, the network device makes a further optimization attempt based on the second congestion control parameter. Therefore, a probability that the network device obtains a superior congestion control parameter is increased, and generalization of the first congestion control rule is improved.

In a possible design, if the third reward value is less than the second reward value, the network device may reversely modify the second congestion control parameter by using a third step, to obtain a fourth congestion control parameter. After the first device forwards the traffic based on the fourth congestion control parameter, the network device may obtain a fourth traffic characteristic, where the fourth traffic characteristic includes statistical information generated when the first device forwards the traffic based on the fourth congestion control parameter in a fourth period. The network device may obtain a fourth reward value based on the obtained fourth traffic characteristic.

In this embodiment of this application, the second congestion control parameter is a value. The network device may modify the value to increase or decrease the second congestion control parameter. After the network device attempts to increase or decrease the second congestion control parameter to obtain the third congestion control parameter, if the third reward value is less than the second reward value, the network device may determine that the second congestion control parameter is superior to the third congestion control parameter, and the network device may determine that the previous attempt to increase or decrease the second congestion control parameter is incorrect. Therefore, the network device reversely modifies the second congestion control parameter by using the third step, to obtain the fourth congestion control parameter. The reverse modification specified herein is merely intended to distinguish from the forward modification, and the reverse modification is not limited to a decrease operation performed by the network device on the second congestion control parameter. After the attempt of the network device to obtain the third congestion control parameter that is superior to the second congestion control parameter in one direction fails, the network device attempts to obtain the fourth congestion control parameter that is superior to the second congestion control parameter in an opposite direction. Therefore, the probability that the network device obtains a superior congestion control parameter is increased, and generalization of the first congestion control rule is improved.

In a possible design, the network device modifies the second congestion control parameter by using the third step and obtains the fourth congestion control parameter. After the first device forwards the traffic based on the fourth congestion control parameter, the network device may obtain the fourth traffic characteristic, where the fourth traffic characteristic includes the statistical information generated when the first device forwards the traffic in the fourth period based on the fourth congestion control parameter. The network device may obtain the fourth reward value based on the obtained fourth traffic characteristic. If the fourth reward value is greater than the second reward value, the network device modifies the first congestion control rule by using the third step and the first step, to obtain the second congestion control rule.

In this embodiment of this application, after the network device modifies the second congestion control parameter by using the third step, to obtain the fourth congestion control parameter, the network device determines that the fourth reward value is greater than the second reward value, that is, the fourth congestion control parameter is superior to the second congestion control parameter, and the second reward value is greater than the first reward value, that is, the second congestion control parameter is superior to the first congestion control parameter. The network device modifies the first congestion control rule by using the third step and the first step. After the network device determines that the fourth congestion control parameter is superior to the second congestion control parameter, the network device modifies the first congestion control rule by using the third step and the first step. The network device not only optimizes the first congestion control parameter that is obtained according to the first congestion control rule twice, but also optimizes the first congestion control rule. Therefore, generalization of the first congestion control rule is essentially improved.

In a possible design, after the network device obtains the fourth congestion control parameter that is superior to the second congestion control parameter, and modifies the first congestion control rule by using the third step and the first step, to obtain the second congestion control rule, the network device generates a new congestion control parameter of the first device based on the fourth traffic characteristic according to the second congestion control rule, where the new congestion control parameter is used by the first device to control traffic forwarding.

In this embodiment of this application, after the network device modifies the second formula by using the third step and the first step, the network device may obtain the new congestion control parameter based on the fourth traffic characteristic according to the second congestion control rule, where the new congestion control parameter may be used to control the traffic forwarded by the first device. The network device obtains the new congestion control parameter according to the new congestion control parameter. To be specific, the network device replaces the first congestion control rule with the second congestion control rule, where the second congestion control rule is obtained by optimizing the first congestion control rule. Therefore, the congestion indicator of the first device is improved, and generalization of the first congestion control rule is improved.

In a possible design, the second step is greater than the first step.

In this embodiment of this application, the second step is greater than the first step. After the network device modifies the first congestion control parameter by using the first step, the network device obtains the second congestion control parameter that is superior to the first congestion control parameter. This proves that it is necessary and correct for the network device to modify the first congestion control parameter. Therefore, when the network device modifies the second congestion control parameter by using the step, the second step that is greater than the first step may be used. Because the second step is greater than the first step, the network device can more quickly determine, within a value range of the congestion control parameter, the optimal congestion control parameter determined by the network device.

Therefore, convergence time can be reduced.

In a possible design, a third congestion control rule is configured for the network device, and the network device may obtain a fifth congestion control parameter according to the third congestion control rule. After the second device forwards traffic based on the fifth congestion control parameter, the network device may obtain a fifth traffic characteristic, where the fifth traffic characteristic includes statistical information generated when the second device forwards the traffic in the first period based on the fifth congestion control parameter. The network device may obtain a fifth reward value based on the obtained fifth traffic characteristic. After the network device obtains the fifth congestion control parameter according to the third congestion control rule, the network device may modify the fifth congestion control parameter by using a fourth step, to obtain a sixth congestion control parameter. Because the first step is not equal to 0, the sixth congestion control parameter is not equal to the fifth congestion control parameter. After the second device forwards traffic based on the sixth congestion control parameter, the network device may obtain a sixth traffic characteristic, where the sixth traffic characteristic includes statistical information generated when the second device forwards the traffic in the second period based on the sixth congestion control parameter. The network device may obtain a sixth reward value based on the obtained sixth traffic characteristic. The network device may determine whether a sum of the sixth reward value and the second reward value is greater than a sum of the fifth reward value and the first reward value. If the network device determines that the sum of the sixth reward value and the second reward value is greater than the sum of the fifth reward value and the first reward value, the network device performs the corresponding processing.

In this embodiment of this application, after obtaining the fifth congestion control parameter according to the third congestion control rule, the network device may obtain the fifth traffic characteristic, where the fifth traffic characteristic includes the statistical information generated when the second device forwards the traffic in the first period based on the fifth congestion control parameter, and the fifth congestion control parameter is obtained according to the third congestion control rule. The network device may obtain the fifth reward value based on the fifth traffic characteristic. After modifying a third congestion control parameter by using the fourth step, the network device may obtain the sixth congestion control parameter. The network device may further obtain the sixth traffic characteristic, where the sixth traffic characteristic includes the statistical information generated when the second device forwards the traffic in the second period based on the sixth congestion control parameter. The network device may obtain the sixth reward value based on the sixth traffic characteristic. After the network device obtains the first reward value, the second reward value, the fifth reward value, and the sixth reward value, the network device may determine whether the sum of the sixth reward value and the second reward value is greater than the sum of the fifth reward value and the first reward value. If the network device determines that the sum of the sixth reward value and the second reward value is greater than the sum of the fifth reward value and the first reward value, the network device performs the corresponding processing. In network traffic control, traffic between the first device and the second device may affect each other, and therefore the sums of the reward values of the two devices are comprehensively considered in the network device. The network device modifies the first congestion control parameter by using the first step, and obtains the second congestion control parameter. The network device modifies the fifth congestion control parameter by using the fourth step, and obtains the sixth congestion control parameter. Because the sum of the sixth reward value and the second reward value is greater than the sum of the fifth reward value and the first reward value, modifying the first congestion control parameter and the second congestion control parameter by the network device this time is beneficial. Therefore, while control of traffic forwarded by a plurality of devices is improved, scenario generalization of the first congestion control rule and the second congestion control rule is improved.

In a possible design, after the network device determines that the sum of the sixth reward value and the second reward value is greater than the sum of the fifth reward value and the first reward value, the network device modifies the third congestion control rule by using the fourth step, and the network device modifies the first congestion control rule by using the first step.

In this embodiment of this application, after the network device modifies the fifth congestion control parameter by using the fourth step and obtains the fifth congestion control parameter, the network device determines that the sum of the sixth reward value and the second reward value is greater than the sum of the fifth reward value and the first reward value, that is, a consolidated reward value generated based on the sixth congestion control parameter and the second congestion control parameter is superior to a consolidated reward value generated based on the fifth congestion control parameter and the first congestion control parameter. Therefore, the network device modifies the first congestion control rule by using the first step, and the network device modifies the third congestion control rule by using the fourth step. After the network device determines that the sum of the sixth reward value and the second reward value is greater than the sum of the fifth reward value and the first reward value, the network device modifies the first congestion control rule and the third congestion control rule. The network device not only optimizes the first congestion control parameter that is obtained according to the first congestion control rule and the fifth congestion control parameter that is obtained according to the third congestion control parameter, but also optimizes the first congestion control rule and the third congestion control rule. Therefore, generalization of the congestion control rule is improved essentially.

In a possible design, after the network device determines that the sum of the sixth reward value and the second reward value is greater than the sum of the fifth reward value and the first reward value, the network device modifies the second congestion control parameter by using a second step, to obtain the third congestion control parameter, and the network device modifies the sixth congestion control parameter by using a fifth step, to obtain a seventh congestion control parameter. After the first device forwards traffic based on the third congestion control parameter, and the second device forwards traffic based on the seventh congestion control parameter, the network device may obtain a third traffic characteristic and a seventh traffic characteristic. The third traffic characteristic includes statistical information generated when the first device forwards the traffic based on the third congestion control parameter in a third period. The seventh traffic characteristic includes statistical information generated when the second device forwards the traffic in the third period based on the third congestion control parameter. The network device obtains a third reward value based on the third traffic characteristic, and obtains a seventh reward value based on the seventh traffic characteristic.

In this embodiment of this application, after the network device determines that the sum of the sixth reward value and the second reward value is greater than the sum of the fifth reward value and the first reward value, the network device modifies the second congestion control parameter by using the second step, to obtain the third congestion control parameter, and the network device modifies the sixth congestion control parameter by using the fifth step, to obtain the seventh congestion control parameter. The consolidated reward value of the sixth congestion control parameter and the second congestion control parameter is greater than the consolidated reward value of the fifth congestion control parameter and the first congestion control parameter, that is, the reward value generated by combining the sixth congestion control parameter and the second congestion control parameter is greater than the reward value generated by combining the fifth congestion control parameter and the first congestion control parameter. After the network device obtains a combination that is superior to the combination of the first congestion control parameter and the fifth congestion control parameter, because the combination of the second congestion control parameter and the sixth congestion control parameter may not be an optimal congestion control parameter combination, the network device makes a further optimization attempt based on the combination of the second congestion control parameter and the sixth congestion control parameter. Therefore, a probability that the network device obtains a combination that is superior to the combination of the second congestion control parameter and the sixth congestion control parameter is increased, and generalization of the first congestion control rule and the third congestion control rule is improved.

A second aspect of embodiments of this application provides a congestion control apparatus, including a plurality of functional modules. All of the plurality of functional modules may be software modules or hardware modules, or may be combinations of a software module and a hardware module. Division of the plurality of functional modules may be different based on implementations, and a criterion is that the method according to the first aspect and the implementations of the first aspect can be implemented.

A third aspect of embodiments of this application provides a congestion control device, including a memory and a processor, where

the memory is configured to store a program; and the processor is configured to execute the program stored in the memory, so that the congestion control device performs the method according to any one of the first aspect or the implementations of the first aspect.

A fourth aspect of embodiments of this application provides a computer storage medium, where the computer storage medium stores instructions. When the instructions are executed on a computer, the computer is enabled to perform the method according to any one of the first aspect or the implementations of the first aspect.

A fifth aspect of embodiments of this application provides a computer program product. When the computer program product is run on a computer, the computer is enabled to perform the method according to any one of the first aspect or the implementations of the first aspect.

**BRIEF DESCRIPTION OF DRAWINGS**

FIG. 1 is a schematic diagram of a network framework according to an embodiment of this application;
FIG. 2 is a schematic flowchart of a congestion control method according to an embodiment of this application;
FIG. 3A and FIG. 3B are another schematic flowchart of a congestion control method according to an embodiment of this application;
FIG. 4A and FIG. 4B are another schematic flowchart of a congestion control method according to an embodiment of this application;
FIG. 5A and FIG. 5B are another schematic flowchart of a congestion control method according to an embodiment of this application;
FIG. 6 is a schematic diagram of a structure of a congestion control apparatus according to an embodiment of this application;

FIG. 7 is another schematic diagram of a structure of a congestion control apparatus according to an embodiment of this application; and
FIG. 8 is a schematic diagram of a structure of a congestion control device according to an embodiment of this application.

**DESCRIPTION OF EMBODIMENTS**

Embodiments of this application provide a congestion control method and a related device that are applied to the field of network control, to improve scenario generalization of a congestion control rule.

To better understand a congestion control method in embodiments of this application, the following describes terms used in embodiments of this application.

AI model: An AI model is an algorithm. It is a model through which a solution can be obtained by inputting data after the model is trained by using historical data. The AI model can be a mainstream deep neural network model or a conventional machine learning model.

Traffic control: On a network, when traffic passes through a network node, the network node generates traffic. To keep the traffic stable, that is, to ensure that the traffic meets a specific condition, the traffic of the network node is controlled. The network node may be a network device, for example, a server, a switch, or a router.

Currently, network technologies such as TCP and RDMA are widely used in fields such as a wide area network and a data center. These network technologies have higher requirements for networks, where a throughput and a latency are main congestion indicators. For example, in a TCP network, a network device discards a packet based on a drop probability parameter to perform traffic control. In an RDMA network, an explicit congestion notification (explicit congestion notification, ECN) threshold is dynamically adjusted to meet a throughput and a latency. For example, an ECN mechanism is widely applied to a high-performance data center network that is based on an enhanced RoCE (RDMA over Converged Ethernet). Appropriate ECN configuration plays a key role in network traffic control. If the ECN threshold is excessively high, a switch queue may be stacked, and a network latency and a service latency increase. If the ECN threshold is excessively low, a network throughput may be low and a service throughput may decrease. Appropriately adjusting the ECN configuration is important for improving bandwidth utilization of the network and reducing the network latency. Three ECN values can be configured for a queue on the switch: a high threshold, a low threshold, and a maximum marking probability. Two thresholds of a queue length define a marking probability. The two thresholds are the low threshold and the high threshold. When the queue length is smaller than the low threshold, the ECN is not marked, that is, an actual marking probability is 0. When the queue length exceeds the high threshold, all network packets transmitted from the queue are marked with the ECN field, that is, the actual marking probability is 1. When the queue length is between the two thresholds, the data packets are marked with the ECN field at a probability that increases linearly with the queue length. The switch is used as an example to describe a meaning of the ECN field. The ECN high threshold and the ECN low threshold are configured on the switch. When a switch port is congested, it is determined, based on the ECN thresholds, whether to mark the packets with the ECN field. A receive end generates a congestion notification packet (congestion notification packet, CNP) based on the packets marked with the ECN field to notify a source end, and a source network interface card reduces a transmission rate based on a quantity of CNP packets. Therefore, congestion is prevented.

Because there are various services and network traffic, network traffic models are different. In different network traffic models, how a network device dynamically adjusts and accurately adapts to a congestion control parameter based on a traffic change to ensure network performance becomes an important challenge in the network.

The following describes technical solutions in embodiments of this application with reference to accompanying drawings. For example, features or content marked by dashed lines in the accompanying drawings in embodiments of this application may be understood as optional operations or optional structures of the embodiments.

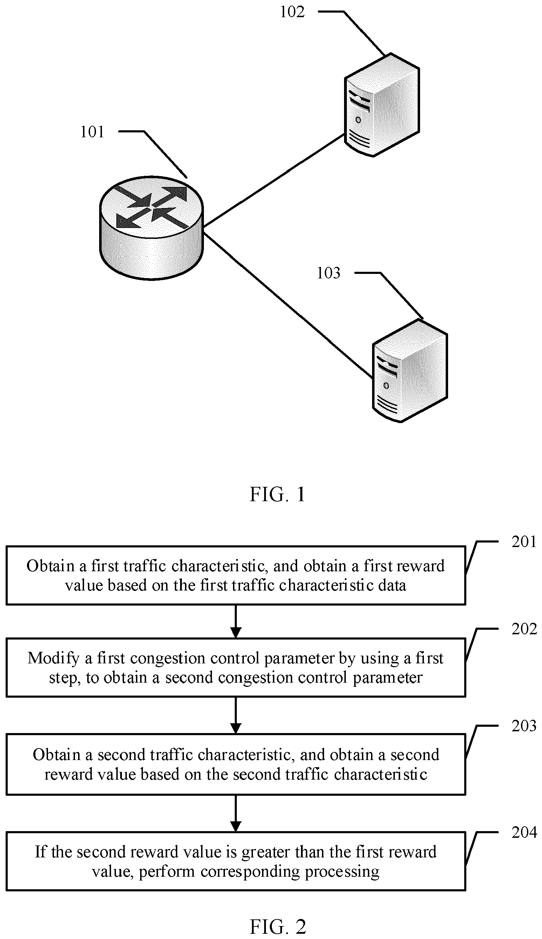

Refer to FIG. 1. A network framework according to an embodiment of this application includes: a network device 101, a first device 102, and a second device 103. The network device 101 is connected to the first device 102 and the second device 103.

The connection between the network device 101 and the first device 102 and the connection between the network device 101 and the second device 103 may be wired network connection, or may be wireless network connection.

In actual application, the network device 101 may be connected to more devices.

A main function of the network device 101 is to obtain a traffic characteristic of the first device 102 or traffic characteristics of the first device 102 and the second device 103. The traffic characteristic includes statistical information generated when the first device 102 forward traffic based on a congestion control parameter, or statistical information generated when the first device 102 and the second device 103 forward traffic based on congestion control parameters. The network device 101 generates, according to a congestion control rule, a congestion control parameter based on the obtained traffic characteristic. The network device 101 may further calculate a reward value based on the obtained traffic characteristic, to assess a congestion status of the first device 102 or congestion statues of the first device 102 and the second device 103.

A main function of the first device 102 is to control traffic forwarding based on the obtained congestion control parameter, and generate a traffic characteristic based on traffic forwarding. A function of the second device 103 is similar to the function of the first device 102.

In embodiments of this application, the network device 101 may not exist. When the network device 101 does not exist, the first device 102 may complete all functions of the network device 101.

In embodiments of this application, the network device 101 and the second device 103 may not exist. The first device 102 does not need to jointly control traffic forwarding with the second device 103, and the first device 102 completes all functions of the network device 101.

The foregoing describes the network framework in embodiments of this application, and the following describes a congestion control method in embodiments of this application.

Refer to FIG. 2. FIG. 2 is a schematic flowchart of a congestion control method according to an embodiment of this application.

In Step 201, a network device obtains a first traffic characteristic, and obtains a first reward value based on the first traffic characteristic data.

A first congestion control rule is configured for the network device. When the network device needs to control traffic of a first device, the network device may obtain a first congestion control parameter according to the first congestion control rule. After the network device obtains the first congestion control parameter according to the first congestion control rule, the network device may obtain the first traffic characteristic, where the first traffic characteristic includes statistical information generated when the first device forwards the traffic in a first period based on the first congestion control parameter. The network device may obtain the first reward value based on the first traffic characteristic.

In Step 202, the network device modifies the first congestion control parameter by using a first step, to obtain a second congestion control parameter.

The network device modifies the first congestion control parameter by using the first step, to obtain the second congestion control parameter, where the second congestion control parameter is not equal to the first congestion control parameter.

In Step 203, the network device obtains a second traffic characteristic, and obtains a second reward value based on the second traffic characteristic.

After the network device modifies the first congestion control parameter by using the first step and obtains the second congestion control parameter, the network device may obtain the second traffic characteristic. The second traffic characteristic includes statistical information generated when the first device forwards traffic in a second period based on the second congestion control parameter. The network device may obtain the second reward value based on the second traffic characteristic.

In Step 204, corresponding processing is performed by the network device if the second reward value is greater than the first reward value.

After the network device obtains the second reward value and the first reward value, the network device may determine whether the second reward value is greater than the first reward value. If the network device determines that the second reward value is greater than the first reward value, the network device performs the corresponding processing.

In this embodiment of this application, if the network device determines that the second reward value is greater than the first reward value, the network device may perform different types of processing. Processing in this condition is collectively referred to as the corresponding processing in this application. The corresponding processing performed by the network device may be considered as a corresponding operation of accepting the modification to the first congestion control parameter.

In this embodiment of this application, after obtaining the first congestion control parameter according to the first congestion control rule, the network device may obtain the first traffic characteristic, where the first traffic characteristic includes the statistical information generated when the first device forwards the traffic in the first period based on the first congestion control parameter, and the first congestion control parameter is obtained according to the first congestion control rule. The network device may obtain the first reward value based on the first traffic characteristic. After modifying the first congestion control parameter by using the first step, the network device may obtain the second congestion control parameter. The network device may further obtain the second traffic characteristic, where the second traffic characteristic includes the statistical information generated when the first device forwards the traffic in the second period based on the second congestion control parameter. The network device may obtain the second reward value based on the second traffic characteristic. If the second reward value is greater than the first reward value, the network device performs the corresponding processing. The network device modifies the first congestion control parameter by using the first step, to obtain the second congestion control parameter based on which a larger reward value is obtained. Because the second reward value is greater than the first reward value, the second congestion control parameter is superior to the first congestion control parameter. Therefore, the network device optimizes an inference result that is obtained according to the first congestion control rule. This improves scenario generalization of the first congestion control rule.

In the congestion control method in this embodiment of this application, the first congestion control parameter may be one parameter, or may be a plurality of parameters. The following separately describes the two situations.

1. The first congestion control parameter is one parameter.

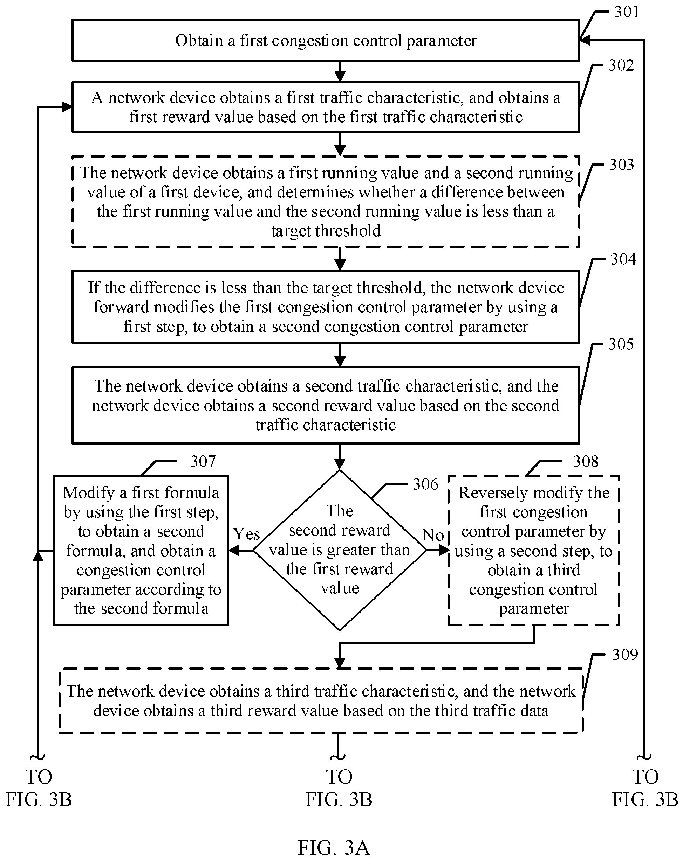

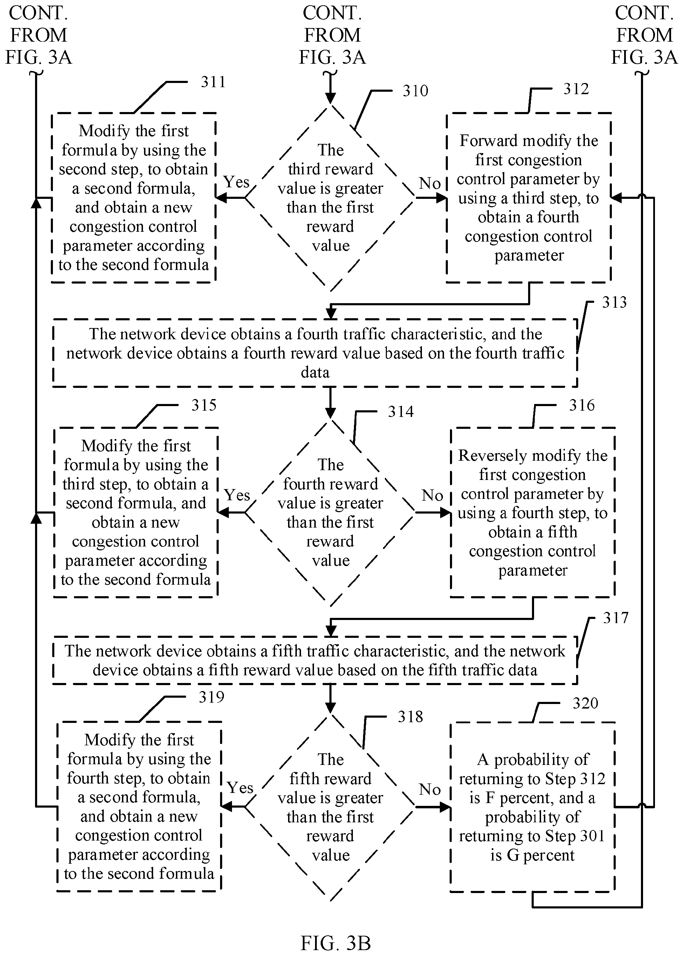

Refer to FIG. 3A and FIG. 3B. FIG. 3 A and FIG. 3B are a schematic flowchart of a congestion control method according to another embodiment of this application.

In Step 301, the network device obtains a first congestion control parameter.

A first congestion control rule is configured for the network device, and the first congestion control rule is a first formula. When the network device needs to control traffic of a first device, the network device may substitute a collected traffic characteristic into the first formula, to obtain the first congestion control parameter output according to the first formula. For ease of understanding of the congestion control method in this embodiment, the following formula is used as the first formula in this embodiment:

$$Q=F(A, B);$$

where Q is a congestion control parameter, A is a rate, and B is a specified latency.

The rate A may be a forwarding rate of the first device or a queue of the first device. The forwarding rate is a type of the traffic characteristic. The traffic characteristic is statistical information generated when the first device forwards the traffic, for example, a quantity of outgoing packet bytes, a quantity of outgoing packets, a queue depth, a quantity of packets that are marked with an ECN field, throughput information, a quantity of dropped packets.

The specified latency B is a preset value. A personnel for congestion control configuration of the first device may set the value of the specified latency based on experience or a template. The value of the specified latency reflects a requirement of the configuration personnel on the latency in congestion indicators of the first device.

The first formula may be specifically $Q=A*B$.

A specific procedure of obtaining the first congestion control parameter may be as follows. The network device collects a rate A of the first device in a previous period, obtains a preset specified latency B, and then substitutes the rate A and the specified latency B into the first formula, to obtain the first congestion control parameter Q.

Optionally, when there is no rate A of the previous period, the network device may use a preset rate, or the network device does not obtain the first congestion control parameter in a current period and waits for a next period to obtain a rate of the current period. The network device obtains the first congestion control parameter based on the rate of the current period, to control traffic of the first device in the next period.

Optionally, the first congestion control parameter may be a marking probability or a drop probability.

The first congestion control rule may be an AI model. In actual application, an AI model may be selected as the first congestion control rule. For ease of description, in this embodiment, an example in which the first congestion control rule is the first formula is used for description.

Optionally, the network device may be the first device, or may be a device other than the first device.

In Step 302, the network device obtains a first traffic characteristic, where the first traffic characteristic includes statistical information generated when the first device forwards traffic in a first period based on the first congestion control parameter; and the network device obtains a first reward value based on the first traffic characteristic.

After the network device obtains the first congestion control parameter according to the first congestion control rule, the network device may obtain the first traffic characteristic. The first traffic characteristic includes the statistical information generated when the first device forwards the traffic in the first period based on the first congestion control parameter, and the first traffic characteristic may be specifically statistical information of the first device, statistical information of a port of the first device, or statistical information of a queue of the first device. The network device may obtain the first reward value based on the first traffic characteristic.

For ease of understanding and description, a concept of period is introduced in the description of this embodiment. The first device controls, in the first period based on the first congestion control parameter, the traffic forwarded by the first device. The first device controls, in a second period based on a second congestion control parameter, traffic forwarded by the first device. The first traffic characteristic includes the statistical information generated when the first device forwards the traffic in the first period based on the first congestion control parameter. A second traffic characteristic includes statistical information generated when the first device forwards the traffic in the first period based on the first congestion control parameter. The others follow the same rule.

Duration of the first period and the second period may be the same, or may be different. There may be an interval between the first period and the second period, or the first period and the second period may be adjacent, or the first period and the second period may overlap.

After the first device controls, based on the first congestion control parameter, the traffic forwarded by the first device in the first period, the network device may obtain the first traffic characteristic. The first traffic characteristic may be a value at a moment of the first period, or may be a value obtained through processing. For example, the first traffic characteristic may be an average in the first period.

Optionally, when the network device is the first device, the network device directly delivers the first congestion control parameter to a forwarding chip, so that the forwarding chip controls, based on the first congestion control parameter, the traffic forwarded by the first device in the first period.

Optionally, when the network device is a device other than the first device, after the network device obtains the first congestion control parameter, the network device sends the first congestion control parameter to the first device, so that the first device controls, in the first period based on the first congestion control parameter, the traffic forwarded by the first device in the first period.

The congestion indicators include a plurality of indicators, such as a latency and a throughput. To facilitate assessment of congestion indicators of the first device in different periods, the indicators of a plurality of aspects are integrated into an indicator of one aspect. The indicator of one aspect is a reward value.

Optionally, preprocessing is performed on the first traffic characteristic to obtain a throughput or a latency. For example, when the first traffic characteristic is a queue depth, the queue depth may be converted into the latency through preprocessing. For example, when the first traffic characteristic is a quantity of outgoing packet bytes, the quantity of outgoing packet bytes may be converted into the throughput through preprocessing. Then, the first reward value is calculated based on the throughput or the latency obtained after the preprocessing.

Optionally, when the congestion indicator includes only indicators of two aspects that are the latency and the throughput, the network device may obtain the first reward value by using the following algorithm

$$R = m*J + n*K;$$

where
R is the first reward value, J is the throughput, K is the latency, and m and n are weighting coefficients.

Optionally, when the congestion indicator includes indicators of three aspects, the network device may obtain the first reward value by using the following algorithm

$$R = m*J + n*K + v*L;$$

where
R is the first reward value, J is the throughput, K is the latency, m and n are weighting coefficients, L is a service performance indicator, and v is a weighting coefficient.

In Step 303, the network device obtains a first running value and a second running value of the first device, and determines whether a difference between the first running value and the second running value is less than a target threshold.

The target threshold is a preset value. When the difference between the first running value and the second running value is less than the target threshold, the network device may modify the first congestion control parameter by using a first step.

Optionally, the first running value is a forwarding rate of the first device in a target period, where the target period is a period before the first period. The second running value is a forwarding rate of the first device in a period before the target period. Alternatively, the first running value is a forwarding rate of a first queue of the first device in the target period, and the second running value is a forwarding rate of the first queue of the first device in the period before the target period.

Optionally, the first running value is a queue depth of the first queue of the first device in the target period, where the target period is a period before the first period, and the first running value is a queue depth of the first queue of the first device in the period before the target period.

When the first running values are different, target thresholds may also be different. For example, when the first running value is the forwarding rate of the first device in the target period, the target threshold is a first threshold; or when the first running value is the forwarding rate of the first queue of the first device in the target period, the target threshold is a second threshold. The first threshold is not equal to the second threshold.

Optionally, the network device may adjust an initial congestion control parameter only according to the first congestion control rule, where the adjusting the initial congestion control rule only according to the first congestion control rule means that the network device adjusts, not by using a step, a congestion control parameter that is obtained by the network device according to the first congestion control rule, and the network device directly uses the congestion control parameter that is obtained according to the first congestion control rule as a parameter for the first device to control traffic forwarding. Before the network device modifies the first congestion control parameter by using the first step, to obtain the second congestion control parameter, the network device may count a quantity of consecutive adjustments to the initial congestion control parameter by the network device only according to the first congestion control rule.

In Step 304, if the difference between the first running value and the second running value is less than the target threshold, the network device forward modifies the first congestion control parameter by using a first step, to obtain the second congestion control parameter.

If the difference between the first running value and the second running value is less than the target threshold, the network device forward modifies the first congestion control parameter by using a first step, to obtain the second congestion control parameter.

The forward modification is merely used to distinguish from reverse modification described below, and does not mean that the first congestion control parameter can only be added forward. For example, the first congestion control parameter is 100, and the first step is 20. After the network device forward modifies the first congestion control parameter by using the first step, the second congestion control parameter may be 80 or 120. To facilitate understanding of the congestion control method in this embodiment, an example in which the second congestion control parameter is 120 is used for description in this embodiment.

Optionally, the first step is a percentage. Because the first congestion control parameter may change greatly in a network, if the first step is a specific value, for example, 20, when the first congestion control parameter is 1000, the modification to the first congestion control parameter by using the first step is small. Therefore, the first step may be a percentage, and interference caused by the change of the first congestion control parameter is eliminated. When the first congestion control parameter is 100 and the first step is 20%, the network device forward modifies the first congestion control parameter by using the first step, and the obtained second step may be 80 or 120.

Optionally, the target threshold may be adjusted based on network fluctuations of the first device. When a network fluctuation of the first device is small, that is, a traffic change of the first device is small, the network device decreases the target threshold. When a network fluctuation of the first device is large, that is, a traffic change of the first device is large, the network device increases the target threshold.

Optionally, when the network device counts the quantity of consecutive adjustments to the initial congestion control parameter by the network device only according to the first congestion control rule, the network device may not obtain the first running value and the second running value of the first device, and the network device may determine whether the quantity of consecutive adjustments is greater than a specified threshold N. When the network device determines that the quantity of consecutive adjustments is greater than the specified threshold N, the network device performs the step of forward modifying the first congestion control parameter by using the first step, to obtain the second congestion control parameter.

Optionally, when the network device counts the quantity of consecutive adjustments to the initial congestion control parameter by the network device only according to the first congestion control rule, and the network device obtains the first running value and the second running value of the first device, provided that one condition is met, the network device performs the step of forward modifying the first congestion control parameter by using the first step, to obtain the second congestion control parameter. The following cases are included.

When the network device determines that the difference between the first running value and the second running value is greater than the target threshold, and the network device determines that the quantity of consecutive adjustments is greater than the specified threshold N, the network device performs the step of forward modifying the first congestion control parameter by using the first step, to obtain the second congestion control parameter.

When the network device determines that the difference between the first running value and the second running value is less than the target threshold, and the network device determines that the quantity of consecutive adjustments is less than the specified threshold N, the network device performs the step of forward modifying the first congestion control parameter by using the first step, to obtain the second congestion control parameter.

When the network device determines that the difference between the first running value and the second running value is less than the target threshold, and the network device determines that the quantity of consecutive adjustments is greater than the specified threshold N, the network device performs the step of forward modifying the first congestion control parameter by using the first step, to obtain the second congestion control parameter.

Optionally, Step 303 may not be performed. When Step 303 is not performed, after the network device obtains the first congestion control parameter, the network device may directly forward modify the first congestion control parameter by using the first step without determining whether the difference between the first running value and the second running value is less than the target threshold, to obtain the second congestion control parameter.

In Step 305, the network device obtains the second traffic characteristic, where the second traffic characteristic includes the statistical information generated when the first device forwards the traffic in the second period based on the second congestion control parameter; and the network device obtains a second reward value based on the second traffic characteristic.

After the network device obtains the second congestion control parameter by forward modifying the first congestion control parameter by using the first step, the network device may obtain the second traffic characteristic. The second traffic characteristic includes the statistical information generated when the first device forwards the traffic in the second period based on the second congestion control parameter, and the second traffic characteristic may be specifically statistical information of the first device, statistical information of a port of the first device, or statistical information of a queue of the first device. After the network device obtains the second traffic characteristic, the network device may obtain the second reward value based on the obtained second traffic characteristic. An algorithm of the second reward value is similar to the algorithm of the first reward value in Step 302. The second traffic characteristic may be a value of the first device at a moment in the second period, or may be a value obtained after processing. For example, the second traffic characteristic may be an average of the first device in the second period.

Optionally, when the network device is the first device, the network device directly delivers the second congestion control parameter to the forwarding chip, so that the forwarding chip controls the traffic forwarded by the first device in the second period.

Optionally, when the network device is a device other than the first device, after the network device obtains the second congestion control parameter, the network device sends the second congestion control parameter to the first device, so that the first device controls, based on the second congestion control parameter, the traffic forwarded by the first device in the second period.

In Step 306, the network device determines whether the second reward value is greater than the first reward value.

After the network device obtains the second reward value and the first reward value, the network device determines whether the second reward value is greater than the first reward value.

In Step 307, if the second reward value is greater than the first reward value, the network device modifies the first formula by using the first step, to obtain a second formula, and obtains a congestion control parameter according to the second formula.

If the second reward value is greater than the first reward value, the network device modifies the first formula by using the first step, to obtain a second formula, and obtains a congestion control parameter according to the second formula.

Optionally, the second formula may be the following formula:

$$Q=A*B*(1+C1);$$

where
Q is a congestion control parameter, A is a rate, B is a specified latency, and C1 is a first step which is a percentage.

The network device sets the latency and the first step based on a rate of the first device in the first period, may obtain a congestion control parameter according to the second formula, uses the congestion control parameter as the first congestion control parameter, uses the second formula as the first formula, and returns to Step 302.

Optionally, when the network device determines that the second reward value is greater than the first reward value, the network device does not first perform the step of modifying, by using the first step, the first formula to obtain the second formula, but continues to forward modify the second congestion control parameter by using the second step, to obtain a third congestion control parameter. The network device obtains a third traffic characteristic, where the third traffic characteristic includes statistical information generated when the first device forwards traffic in a third period based on the third congestion control parameter. The network device obtains a third reward value based on the third traffic characteristic. If the third reward value is greater than the second reward value, the network device continues to forward modify the third congestion control parameter by using a third step, to obtain a fourth congestion control parameter. The network device obtains a fourth traffic characteristic, where the fourth traffic characteristic includes statistical information generated when the first device forwards traffic in a fourth period based on the fourth congestion control parameter. The network device obtains a fourth reward value based on the fourth traffic characteristic. The others follow the same rule until a $(T+1)^{th}$ reward value is less than a $T^{th}$ reward value. The network device uses a sum of all steps from the first step, the second step, to a $(T-1)^{th}$ step as a first step, and performs the step of modifying the first formula by using the first step, to obtain the second formula.

In Step 308, if the second reward value is less than the first reward value, the network device reversely modifies the first congestion control parameter by using the second step, to obtain a third congestion control parameter.

If the second reward value is less than the first reward value, the network device reversely modifies the first congestion control parameter by using the second step, to obtain a third congestion control parameter.

The reverse modification is merely used to distinguish from the forward modification described above, and does not mean that the first congestion control parameter can only be reduced reversely. For example, the first congestion control parameter is 100, and the second step is 20. After the network device reversely modifies the first congestion control parameter by using the second step, the third congestion control parameter may be 80 or 120. To facilitate understanding of the congestion control method in this embodiment, an example in which the third congestion control parameter is 80 is used for description in this embodiment.

Optionally, the second step may be equal to the first step. For example, the first step is 20%, or the second step may be 20%.

In Step 309, the network device obtains a third traffic characteristic, where the third traffic characteristic includes statistical information generated when the first device forwards traffic in a third period based on the third congestion control parameter; and the network device obtains a third reward value based on the third traffic characteristic.

After the network device obtains the third congestion control parameter by reversely modifying the first congestion control parameter by using the first step, the network device obtains the third traffic characteristic. The third traffic characteristic includes the statistical information generated when the first device forwards the traffic in the third period based on the third congestion control parameter, and the third traffic characteristic may be specifically statistical information of the first device, statistical information of a port of the first device, or statistical information of a queue of the first device. After the network device obtains the third traffic characteristic, the network device may obtain the third reward value based on the obtained third traffic characteristic. An algorithm of the third reward value is similar to the algorithm of the first reward value in Step 302.

In Step 310, the network device determines whether the third reward value is greater than the first reward value.

After the network device obtains the third reward value and the first reward value, the network device determines whether the third reward value is greater than the first reward value.

In Step 311, if the third reward value is greater than the first reward value, the network device modifies the first formula by using the second step, to obtain a second formula, and obtains a new congestion control parameter according to the second formula.

If the third reward value is greater than the first reward value, the network device modifies the first formula by using the second step, to obtain a second formula, and obtains a congestion control parameter according to the second formula.

Optionally, the second formula may be the following algorithm

$$Q=A*B*(1+C2);$$

where
Q is a congestion control parameter, A is a rate, B is a specified latency, and C2 is a second step which is a percentage.

The network device sets the latency and the first step based on a rate of the first device in the second period, may obtain a congestion control parameter according to the second formula, uses the congestion control parameter as the first congestion control parameter, uses the second formula as the first formula, and returns to Step 302.

Optionally, when the network device determines that the third reward value is greater than the first reward value, the network device does not first perform the step of modifying, by using the first step, the first formula to obtain the second formula, but continues to reversely modify the third congestion control parameter by using the third step, to obtain a fourth congestion control parameter. The network device obtains a fourth traffic characteristic, where the fourth traffic characteristic includes statistical information generated when the first device forwards traffic in a fourth period based on the fourth congestion control parameter. The network device obtains a fourth reward value based on the fourth traffic characteristic. If the fourth reward value is greater than the third reward value, the network device continues to reversely modify the fourth congestion control parameter by using a fourth step, to obtain a fifth congestion control parameter. The network device obtains a fifth traffic characteristic, where the fifth traffic characteristic includes statistical information generated when the first device forwards traffic in a fifth period based on the fifth congestion control parameter. The network device obtains a fifth reward value based on the fifth traffic characteristic. The others follow the same rule until a $(T+1)^{th}$ reward value is less than a $T^{th}$ reward value. The network device uses a sum of all steps from the first step, the second step, to a $(T-1)^{th}$ step as a second step, and performs the step of modifying the first formula by using the second step, to obtain the second formula.

In Step 312, if the third reward value is less than the first reward value, the network device forward modifies the first congestion control parameter by using the third step, to obtain a fourth congestion control parameter.

Optionally, the third step is greater than the first step. Because both the obtained second reward value and the third reward value are less than the first reward value after the network device forward and reversely modifies the first congestion control parameter, a local optimum might be returned. It is assumed that the first congestion control parameter is 100, the second congestion control parameter is 120, and the second congestion control parameter is 80. There is a probability that in an interval between 80 and 120, a solution around 100 is an optimal solution. To avoid the local optimum, the third step needs to be greater than the first step.

In Step 313, the network device obtains a fourth traffic characteristic, where the fourth traffic characteristic includes statistical information generated when the first device forwards traffic in a fourth period based on the fourth congestion control parameter; and the network device obtains a fourth reward value based on the fourth traffic characteristic.

After the network device obtains the fourth congestion control parameter by forward modifying the first congestion control parameter by using the third step, the network device obtains the fourth traffic characteristic. The fourth traffic characteristic includes the statistical information generated when the first device forwards the traffic in the fourth period based on the fourth congestion control parameter, and the fourth traffic characteristic may be specifically statistical information of the first device, statistical information of a port of the first device, or statistical information of a queue of the first device. After the network device obtains the fourth traffic characteristic, the network device may obtain the fourth reward value based on the obtained fourth traffic characteristic. An algorithm of the fourth reward value is similar to the algorithm of the first reward value in Step 302.

In Step 314, the network device determines whether the fourth reward value is greater than the first reward value.

After the network device obtains the fourth reward value and the first reward value, the network device determines whether the fourth reward value is greater than the first reward value.

In Step 315, if the fourth reward value is greater than the first reward value, the network device modifies the first formula by using the third step, to obtain a second formula, and obtains a new congestion control parameter according to the second formula.

If the fourth reward value is greater than the first reward value, the network device modifies the first formula by using the third step, to obtain a second formula, and obtains a new congestion control parameter according to the second formula.

Optionally, the second formula may be the following algorithm

$$Q = A * B * (1 + C3);$$

where
Q is a congestion control parameter, A is a rate, B is a specified latency, and C3 is a third step which is a percentage.

The network device sets the latency and the first step based on a rate of the first device in the fourth period, may obtain a congestion control parameter according to the second formula, uses the congestion control parameter as the first congestion control parameter, uses the second formula as the first formula, and returns to Step 302.

Optionally, when the network device determines that the fourth reward value is greater than the first reward value, the network device does not first perform the step of modifying, by using the third step, the first formula to obtain the second formula, but continues to forward modify the fourth congestion control parameter by using the fourth step, to obtain a fifth congestion control parameter. The network device obtains a fifth traffic characteristic, where the fifth traffic characteristic includes statistical information generated when the first device forwards traffic in a fifth period based on the fifth congestion control parameter. The network device obtains a fifth reward value based on the fifth traffic characteristic. If the fifth reward value is greater than the fourth reward value, the network device continues to forward modify the fifth congestion control parameter by using a fifth step, to obtain a sixth congestion control parameter. The network device obtains a sixth traffic characteristic, where the sixth traffic characteristic includes statistical information generated when the first device forwards traffic in a sixth period based on the sixth congestion control parameter. The network device obtains a sixth reward value based on the sixth traffic characteristic. The others follow the same rule until a $(T+1)^{th}$ reward value is less than a $T^{th}$ reward value. The network device uses a sum of all steps from the first step, the second step, to a $(T-1)^{th}$ step as a third step, and performs the step of modifying the first formula by using the third step, to obtain the second formula.

In Step 316, if the fourth reward value is less than the first reward value, the network device reversely modifies the first congestion control parameter by using the fourth step, to obtain a fifth congestion control parameter.

If the fourth reward value is less than the first reward value, the network device reversely modifies the first congestion control parameter by using the fourth step, to obtain a fifth congestion control parameter.

Optionally, the fourth step is greater than the second step. Because both the obtained second reward value and the third reward value are less than the first reward value after the network device forward and reversely modifies the first congestion control parameter, a local optimum might be returned. It is assumed that the first congestion control parameter is 100, the second congestion control parameter is 120, and the second congestion control parameter is 80. There is a probability that in an interval between 80 and 120, a solution around 100 is an optimal solution. To avoid the local optimum, the fourth step needs to be greater than the second step.

In Step 317, the network device obtains a fifth traffic characteristic, where the fifth traffic characteristic includes statistical information generated when the first device forwards traffic in a fifth period based on the fifth congestion control parameter; and the network device obtains a fifth reward value based on the fifth traffic characteristic.

After the network device obtains the fifth congestion control parameter by reversely modifying the first congestion control parameter by using the fourth step, the network device obtains the fifth traffic characteristic. The fifth traffic characteristic includes the statistical information generated when the first device forwards the traffic in the fifth period based on the fifth congestion control parameter, and the fifth traffic characteristic may be specifically statistical information of the first device, statistical information of a port of the first device, or statistical information of a queue of the first device. After the network device obtains the fifth traffic characteristic, the network device may obtain the fifth reward value based on the obtained fifth traffic characteristic. An algorithm of the fifth reward value is similar to the algorithm of the first reward value in Step 302.

In Step 318, the network device determines whether the fifth reward value is greater than the first reward value.

After the network device obtains the fifth reward value and the first reward value, the network device determines whether the fifth reward value is greater than the first reward value.

In Step 319, if the fifth reward value is greater than the first reward value, the network device modifies the first formula by using the fourth step, to obtain a second formula, and obtains a new congestion control parameter according to the second formula.

If the fifth reward value is greater than the first reward value, the network device modifies the first formula by using the fourth step, to obtain a second formula, and obtains a congestion control parameter according to the second formula.

Optionally, the second formula may be the following algorithm

$$Q=A*B*(1+C4);$$

where
Q is a congestion control parameter, A is a rate, B is a specified latency, and C4 is a fourth step which is a percentage.

The network device sets the latency and the first step based on a rate of the first device in the fifth period, may obtain a congestion control parameter according to the second formula, uses the congestion control parameter as the first congestion control parameter, uses the second formula as the first formula, and returns to Step 302.

Optionally, when the network device determines that the fifth reward value is greater than the first reward value, the network device does not first perform the step of modifying, by using the fourth step, the first formula to obtain the second formula, but continues to reversely modify the fifth congestion control parameter by using the fifth step, to obtain a sixth congestion control parameter. The network device obtains a sixth traffic characteristic, where the sixth traffic characteristic includes statistical information generated when the first device forwards traffic in a sixth period based on the sixth congestion control parameter. The network device obtains a sixth reward value based on the sixth traffic characteristic. If the sixth reward value is greater than the fifth reward value, the network device continues to reversely modify the sixth congestion control parameter by using a sixth step, to obtain a seventh congestion control parameter. The network device obtains a seventh traffic characteristic, where the seventh traffic characteristic includes statistical information generated when the first device forwards traffic in a seventh period based on the seventh congestion control parameter. The network device obtains a seventh reward value based on the seventh traffic characteristic. The others follow the same rule until a $(T+1)^{th}$ reward value is less than a $T^{th}$ reward value. The network device uses a sum of all steps from the first step, the second step, to a $(T-1)^{th}$ step as a fourth step, and performs the step of modifying the first formula by using the fourth step, to obtain the second formula.

In Step 320, if the fifth reward value is greater than the first reward value, there is a probability of F percent that the network device uses the third step as the first step, uses the fourth step as the second step, and returns to Step 312. There is a probability of G percent that the network device returns to Step 301.

If the fifth reward value is greater than the first reward value, there is a probability of F percent that the network device uses the third step as the first step, uses the fourth step as the second step, and returns to Step 312. There is a probability of G percent that the network device returns to Step 301.

Optionally, F plus G is equal to 100.

Optionally, the value of F decreases as times of returning to Step 312 increase. For example, for the first time, F is equal to 50. After Step 320, the network device returns to Step 312, and then returns to Step 320 from Step 312. The value of F changes to 40. In this verdict, there is a probability of 40 percent of returning to Step 312.

2. The first congestion control parameter is a plurality of parameters.

For ease of understanding and description, the following uses dynamic adjustment of ECN configuration as an example for description. The first congestion control parameter includes three parameters: a low threshold, a high threshold, and a maximum marking probability.

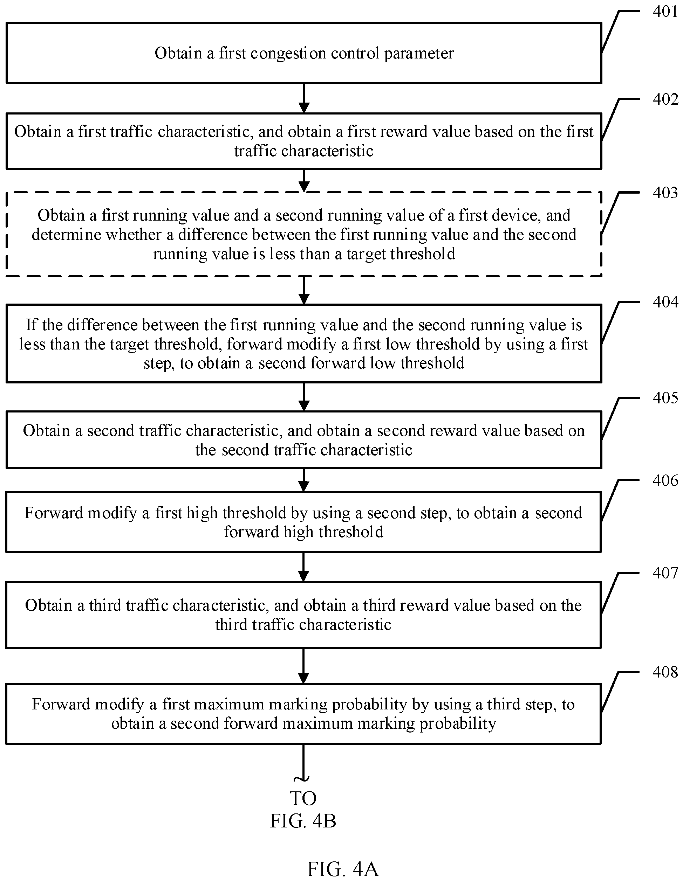

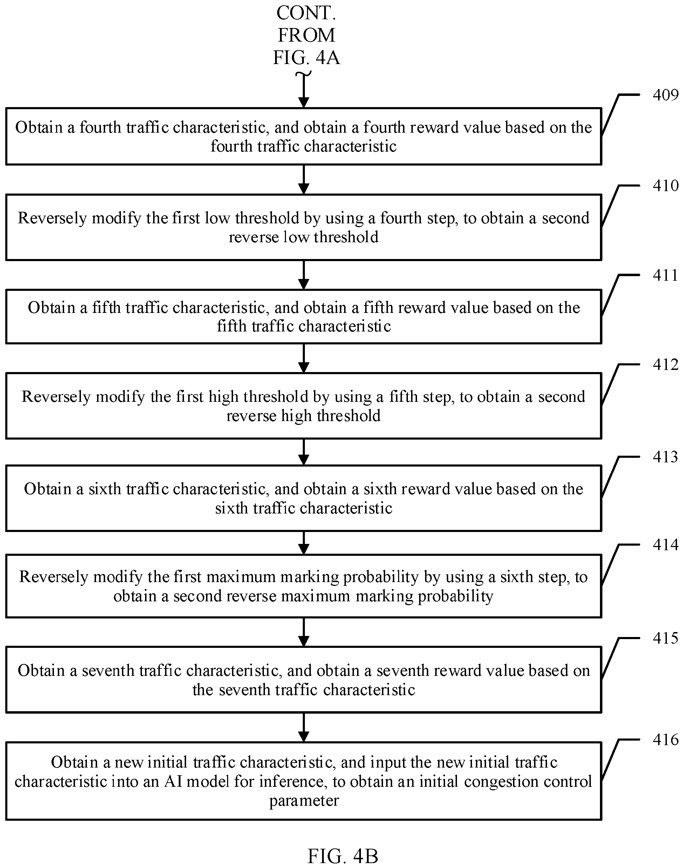

Refer to FIG. 4A and FIG. 4B. FIG. 4 A and FIG. 4B are another schematic flowchart of a congestion control method provided in this application.

In Step 401, the network device obtains a first congestion control parameter.

A first congestion control rule is configured for the network device, and the first congestion control rule is an AI model. When the network device needs to control traffic of the first device, the network device may input a collected initial traffic characteristic into the AI model, to obtain the first congestion control parameter output by the AI model, where the first congestion control parameter includes a first low threshold, a first high threshold, and a first maximum marking probability.

Optionally, when there is no traffic characteristic of a previous period, the network device may use a preset traffic characteristic as an initial traffic characteristic, or the network device does not obtain the first congestion control parameter in a current period and waits for a next period to obtain a traffic characteristic of the current period as the initial traffic characteristic. The network device obtains the first congestion control parameter based on the traffic characteristic of the current period, to control traffic of the first device in the next period.

The first congestion control rule may also be a formula. In actual application, a formula may be selected as the first congestion control rule. For ease of description, in this embodiment, an example in which the first congestion control rule is the AI model is used for description.

Optionally, the network device may be the first device, or may be a device other than the first device.

In Step 402, the network device obtains a first traffic characteristic, where the first traffic characteristic includes statistical information generated when the first device forwards traffic in a first period based on the first congestion control parameter; and the network device obtains a first reward value based on the first traffic characteristic.

In Step 403, the network device obtains a first running value and a second running value of the first device, and determines whether a difference between the first running value and the second running value is less than a target threshold.

Step 402 and Step 403 are similar to Step 302 and Step 303 in FIG. 3A.

In Step 404, if the difference between the first running value and the second running value is less than the target threshold, the network device forward modifies the first low threshold by using a first step, to obtain the second forward low threshold.

If the difference between the first running value and the second running value is less than the target threshold, the network device forward modifies the first low threshold by using the first step, to obtain the second forward low threshold. The network device uses the second forward low threshold, the first high threshold, and the first maximum marking probability as a second congestion control parameter. Other description is similar to Step 304 in FIG. 3A.

In Step 405, the network device obtains a second traffic characteristic, where the second traffic characteristic includes statistical information generated when the first device forwards traffic based on the second congestion control parameter; and the network device obtains a second reward value based on the second traffic characteristic.

Step 405 is similar to Step 305 in FIG. 3A.

In Step 406, the network device forward modifies the first high threshold by using a second step, to obtain a second forward high threshold.

The network device forward modifies the first high threshold by using the second step, to obtain the second forward high threshold. The network device uses a target low threshold, the second forward high threshold, and the first maximum marking probability as a third congestion control parameter. The target low threshold includes the first low threshold or the second forward low threshold. If the second reward value is greater than the first reward value, the target low threshold includes the second forward low threshold. If the second reward value is greater than the first reward value, the target low threshold includes the first low threshold.

Optionally, if the second reward value is greater than the first reward value, the network device forward modifies, by using the second step, the second forward low threshold to obtain a third forward low threshold. The network device uses the third forward low threshold, the first high threshold, and the first maximum marking probability as a third congestion control parameter. The network device obtains a third traffic characteristic, where the third traffic characteristic includes statistical information generated when the first device forwards traffic in a third period based on the third congestion control parameter. The network device obtains a third reward value based on the third traffic characteristic. If the third reward value is greater than the second reward value, the network device continues to forward modify the third forward low threshold by using a third step, to obtain a fourth forward low threshold. The network device uses the fourth forward low threshold, the first high threshold, and the first maximum marking probability as a fourth congestion control parameter. The network device obtains a fourth traffic characteristic, where the fourth traffic characteristic includes statistical information generated when the first device forwards traffic in a fourth period based on the fourth congestion control parameter. The network device obtains a fourth reward value based on the fourth traffic characteristic. The others follow the same rule until a $(T+1)^{th}$ reward value is less than a $T^{th}$ reward value. The network device uses a sum of all steps from the first step, the second step, to a $(T-1)^{th}$ step as a low threshold forward step, where the $T^{th}$ reward value corresponds to a $T^{th}$ forward low threshold. The network device uses the $T^{th}$ forward low threshold as the second forward low threshold.

Optionally, if the second reward value is less than the first reward value, it may be learned that the second forward low threshold that is obtained through forward modification performed by the network device by using the first step is superior to the first low threshold. The network device modifies the AI model based on the second forward low threshold. When a same initial traffic characteristic is input to the AI model, a probability that the AI model outputs the second forward low threshold is reduced. For example, when the initial traffic characteristic is 50, and the initial traffic characteristic 50 is input to the AI model, a probability that the AI model outputs a first low threshold 10, a first high threshold 60, and a first maximum marking probability 50 is 30%, and a probability that the AI model outputs a second forward low threshold 12, a first high threshold 30, and a first maximum marking probability 50 is 7%. The network device modifies the AI model. When the initial traffic characteristic 50 is input to the AI model, a probability that the AI model outputs the second forward low threshold 12, the first high threshold 30, and the first maximum marking probability 50 is 3%. Therefore, when the network device obtains the initial traffic characteristic 50 next time and obtains the congestion control parameter through AI model inference, the probability that the AI model outputs the second forward low threshold 12, the first high threshold 30, and the first maximum marking probability 50 is reduced.

The second steps are used in both the forward modifying the first high threshold by the network device by using the second step and the forward modifying the second forward low threshold by the network device by using the second step. However, the second steps are merely used for ease of description, and do not impose a limitation that values of the two second steps are equal. Similarly, in this embodiment, even if there are same steps, it needs to be further determined whether objects modified by using the steps are the same. It can be determined that the values of the two steps are the same only when the steps are the same and the objects modified by using the steps are the same. For example, the object that is modified in the forward modifying the first high threshold by using the second step by the network device is the first high threshold, and the object that is modified in the forward modifying the second forward low threshold by using the second step by the network device is the second forward low threshold. Therefore, the values of the two steps may be different.

In Step 407, the network device obtains the third traffic characteristic, where the third traffic characteristic includes the statistical information generated when the first device forwards the traffic based on the third congestion control parameter; and the network device obtains the third reward value based on the third traffic characteristic.

The network device obtains the third traffic characteristic, where the third traffic characteristic includes the statistical information generated when the first device forwards the traffic based on the third congestion control parameter; and the network device obtains the third reward value based on the third traffic characteristic.

In Step 408, the network device forward modifies the first maximum marking probability by using the third step, to obtain a second forward maximum marking probability.

The network device forward modifies the first maximum marking probability by using the third step, to obtain the second forward maximum marking probability. The network device uses the target low threshold, a target high threshold, and the second maximum marking probability as the fourth congestion control parameter. The target low threshold includes the first low threshold or the second forward low threshold. If the second reward value is greater than the first reward value, the target low threshold includes the second forward low threshold. If the second reward value is greater than the first reward value, the target low threshold includes the first low threshold, and the target high threshold includes the first high threshold or the second forward high threshold. If the third reward value is greater than the first reward value, and the third reward value is greater than the second reward value, the target high threshold includes the second forward high threshold; otherwise, the target high threshold includes the first high threshold.

Optionally, similar to Step 406, if the third reward value is greater than the second reward value, and the third reward value is greater than the first reward value, the network device may forward modify the second forward high threshold by using the third step.

In Step 409, the network device obtains the fourth traffic characteristic, where the fourth traffic characteristic includes the statistical information generated when the first device forwards the traffic based on the fourth congestion control parameter; and the network device obtains a fourth reward value based on the fourth traffic characteristic.

The network device obtains the fourth traffic characteristic, where the fourth traffic characteristic includes the statistical information generated when the first device forwards the traffic based on the fourth congestion control parameter; and the network device obtains a fourth reward value based on the fourth traffic characteristic.

In Step 410, the network device reversely modifies the first low threshold by using a fourth step, to obtain a second reverse low threshold.

The network device reversely modifies the first low threshold by using the fourth step, to obtain the second reverse low threshold. The network device uses the second reverse low threshold, the target high threshold, and a target maximum marking probability as a fifth congestion control parameter. The target high threshold includes the first high threshold or the second forward high threshold. If the third reward value is greater than the first reward value, and the third reward value is greater than the second reward value, the target high threshold includes the second forward high threshold; otherwise, the target high threshold includes the first high threshold. The target maximum marking probability includes the first maximum marking probability or the second forward maximum marking probability. If the fourth reward value is greater than the third reward value, the fourth reward value is greater than the second reward value, and the fourth reward value is greater than the first reward value, the target maximum marking probability includes the second forward maximum marking probability; otherwise, the target maximum marking probability includes the first maximum marking probability.

Optionally, similar to Step 406, if the fourth reward value is greater than the third reward value, the fourth reward value is greater than the second reward value, and the fourth reward value is greater than the first reward value, the network device may forward modify the second forward maximum marking probability by using the fourth step.

In Step 411, the network device obtains a fifth traffic characteristic, where the fifth traffic characteristic includes statistical information generated when the first device forwards traffic based on the fifth congestion control parameter; and the network device obtains a fifth reward value based on the fifth traffic characteristic.

The network device obtains a fifth traffic characteristic, where the fifth traffic characteristic includes statistical information generated when the first device forwards traffic based on the fifth congestion control parameter; and the network device obtains a fifth reward value based on the fifth traffic characteristic.

In Step 412, the network device reversely modifies the first high threshold by using a fifth step, to obtain a second reverse high threshold.

The network device reversely modifies the first high threshold by using the fifth step, to obtain the second reverse high threshold. The network device uses a reverse target low threshold, the second reverse high threshold, and the target maximum marking probability as a sixth congestion control parameter. The reverse target low threshold includes the target low threshold or the second reverse low threshold. If the fifth reward value is greater than the fourth reward value, the fifth reward value is greater than the third reward value, the fifth reward value is greater than the second reward value, and the fifth reward value is greater than the first reward value, the reverse target low threshold includes the second reverse low threshold; otherwise, the reverse target low threshold includes the target low threshold, and the target maximum marking probability includes the first maximum marking probability or the second forward maximum marking probability. If the fourth reward value is greater than the third reward value, the fourth reward value is greater than the second reward value, and the fourth reward value is greater than the first reward value, the target maximum marking probability includes the second forward maximum marking probability; otherwise, the target maximum marking probability includes the first maximum marking probability.

Optionally, similar to Step 406, if the fifth reward value is greater than the fourth reward value, the fifth reward value is greater than the third reward value, the fifth reward value is greater than the second reward value, and the fifth reward value is greater than the first reward value, the network device may reversely modify the second reverse low threshold by using the fifth step.

In Step 413, the network device obtains a sixth traffic characteristic, where the sixth traffic characteristic includes statistical information generated when the first device forwards traffic based on the sixth congestion control parameter; and the network device obtains a sixth reward value based on the sixth traffic characteristic.

The network device obtains a sixth traffic characteristic, where the sixth traffic characteristic includes statistical information generated when the first device forwards traffic based on the sixth congestion control parameter; and the network device obtains a sixth reward value based on the sixth traffic characteristic.

In Step 414, the network device reversely modifies the first maximum marking probability by using the sixth step, to obtain a second reverse maximum marking probability.

The network device reversely modifies the first maximum marking probability by using the sixth step, to obtain the second reverse maximum marking probability. The network device uses the reverse target low threshold, a reverse target high threshold, and the second reverse maximum marking probability as a seventh congestion control parameter. The reverse target low threshold includes the target low threshold or the second reverse low threshold. If the fifth reward value is greater than the fourth reward value, the fifth reward value is greater than the third reward value, the fifth reward value is greater than the second reward value, and the fifth reward value is greater than the first reward value, the reverse target low threshold includes the second reverse low threshold; otherwise, the reverse target low threshold includes the target low threshold, and the reverse target high threshold includes the target high threshold or the second reverse high threshold. If the sixth reward value is greater than the fifth reward value, the sixth reward value is greater than the fourth reward value, the sixth reward value is greater than the third reward value, the sixth reward value is greater than the second reward value, and the sixth reward value is greater than the first reward value, the reverse target high threshold includes the second reverse high threshold; otherwise, the reverse target high threshold includes the target high threshold.

Optionally, similar to Step 406, if the sixth reward value is greater than the fifth reward value, the sixth reward value is greater than the fourth reward value, the sixth reward value is greater than the third reward value, the sixth reward value is greater than the second reward value, and the sixth reward value is greater than the first reward value, the network device may reversely modify the second reverse high threshold by using the sixth step.

In Step 415, the network device obtains a seventh traffic characteristic, where the seventh traffic characteristic includes statistical information generated when the first device forwards traffic based on the seventh congestion control parameter; and the network device obtains a seventh reward value based on the seventh traffic characteristic.

The network device obtains a seventh traffic characteristic, where the seventh traffic characteristic includes statistical information generated when the first device forwards traffic based on the seventh congestion control parameter; and the network device obtains a seventh reward value based on the seventh traffic characteristic.

In Step 416, the network device obtains a new initial traffic characteristic, and the network device inputs the new initial traffic characteristic into the AI model for inference, to obtain an initial congestion control parameter.

The network device obtains the new initial traffic characteristic, and the network device inputs the new initial traffic characteristic into the AI model for inference to obtain the initial congestion control parameter. The initial congestion control parameter is used to enable the first device to control traffic forwarding based on the initial congestion control parameter. The network device does not need to modify the initial congestion control parameter by using a step, but directly uses the initial congestion control parameter as a parameter for the first device to control traffic forwarding.

Optionally, when the seventh reward value is greater than the first reward value, and the seventh congestion control parameter is not equal to the first congestion control parameter, the network device modifies the AI model based on the seventh congestion control parameter, and the network device performs inference by using the modified AI model, to obtain the initial congestion control parameter. The seventh congestion control parameter includes the reverse target low threshold, a reverse target high threshold, and a reverse target maximum marking probability. The reverse target low threshold includes the target low threshold or the second reverse low threshold. If the fifth reward value is greater than the fourth reward value, the fifth reward value is greater than the third reward value, the fifth reward value is greater than the second reward value, and the fifth reward value is greater than the first reward value, the reverse target low threshold includes the second reverse low threshold; otherwise, the reverse target low threshold includes the target low threshold, and the target low threshold includes the first low threshold or the second forward low threshold. If the second reward value is greater than the first reward value, the target low threshold includes the second forward low threshold. If the second reward value is greater than the first reward value, the target low threshold includes the first low threshold. The reverse target high threshold includes the target high threshold or the second reverse high threshold. If the sixth reward value is greater than the fifth reward value, the sixth reward value is greater than the fourth reward value, the sixth reward value is greater than the third reward value, the sixth reward value is greater than the second reward value, and the sixth reward value is greater than the first reward value, the reverse target high threshold includes the second reverse high threshold; otherwise, the reverse target high threshold includes the target high threshold, and the target high threshold includes the first high threshold or the second forward high threshold. If the third reward value is greater than the first reward value, and the third reward value is greater than the second reward value, the target high threshold includes the second forward high threshold; otherwise, the target high threshold includes the first high threshold. The reverse target maximum marking probability includes the target maximum marking probability or the second reverse maximum marking probability. If the seventh reward value is greater than the sixth reward value, the seventh reward value is greater than the fifth reward value, the seventh reward value is greater than the fourth reward value, the seventh reward value is greater than the third reward value, the seventh reward value is greater than the second reward value, and the seventh reward value is greater than the first reward value, the reverse target maximum marking probability includes the second reverse maximum marking probability; otherwise, the reverse target maximum marking probability includes the target maximum marking probability, and the target maximum marking probability includes the first maximum marking probability or the second forward maximum marking probability. If the fourth reward value is greater than the third reward value, the fourth reward value is greater than the second reward value, and the fourth reward value is greater than the first reward value, the target maximum marking probability includes the second forward maximum marking probability; otherwise, the target maximum marking probability includes the first maximum marking probability.

For example, when a same initial traffic characteristic is input to the AI model, a probability that the AI model outputs the seventh congestion control parameter is increased. For example, when the initial traffic characteristic is 50, and the initial traffic characteristic 50 is input to the AI model, a probability that the AI model outputs a first low threshold 10, a first high threshold 60, and a first maximum marking probability 50 is 30%, and a probability that the AI model outputs the seventh congestion control parameter: a second forward low threshold 12, a second reverse low threshold 27, and a second forward maximum marking probability 60 is 7%. The network device modifies the AI model. When the initial traffic characteristic 50 is input to the AI model, a probability that the AI model outputs the seventh congestion control parameter: the second forward low threshold 12, the second reverse low threshold 27, and the second forward maximum marking probability 60 is 50%. Therefore, when the network device obtains the initial traffic characteristic 50 next time and obtains the congestion control parameter through AI model inference, the probability that the AI model outputs the seventh congestion control parameter: the second forward low threshold 12, the second reverse low threshold 27, and the second forward maximum marking probability 60 is increased from 7% to 50%.

Optionally, similar to Step 406, if the seventh reward value is greater than the sixth reward value, the seventh reward value is greater than the fifth reward value, the seventh reward value is greater than the fourth reward value, the seventh reward value is greater than the third reward value, the seventh reward value is greater than the second reward value, and the seventh reward value is greater than the first reward value, the network device may reversely modify the second reverse maximum marking probability by using the seventh step.

In the congestion control method in this embodiment of this application, in addition to the network device, a single device may use the congestion control method to control traffic forwarded by the device, or a plurality of devices may jointly use the congestion control method to control traffic forwarded by the devices. The foregoing describes a case in which there is a single device. The following describes a case in which there are a plurality of devices.

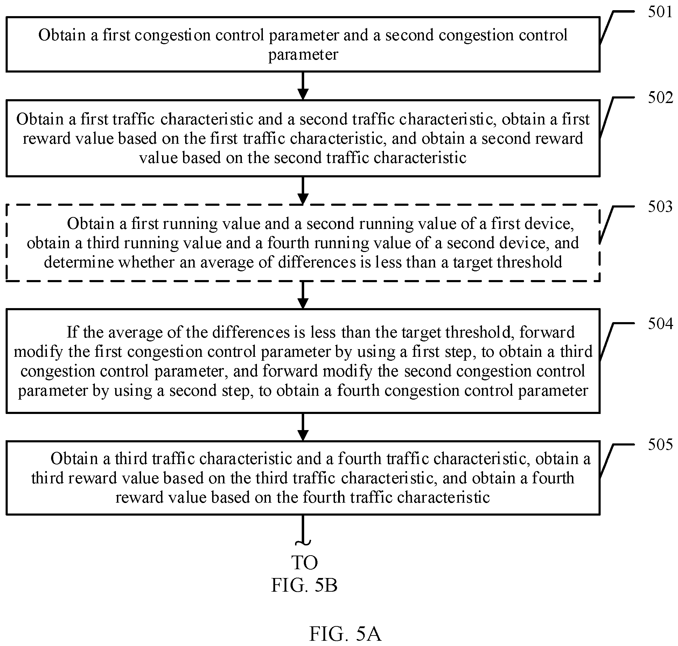

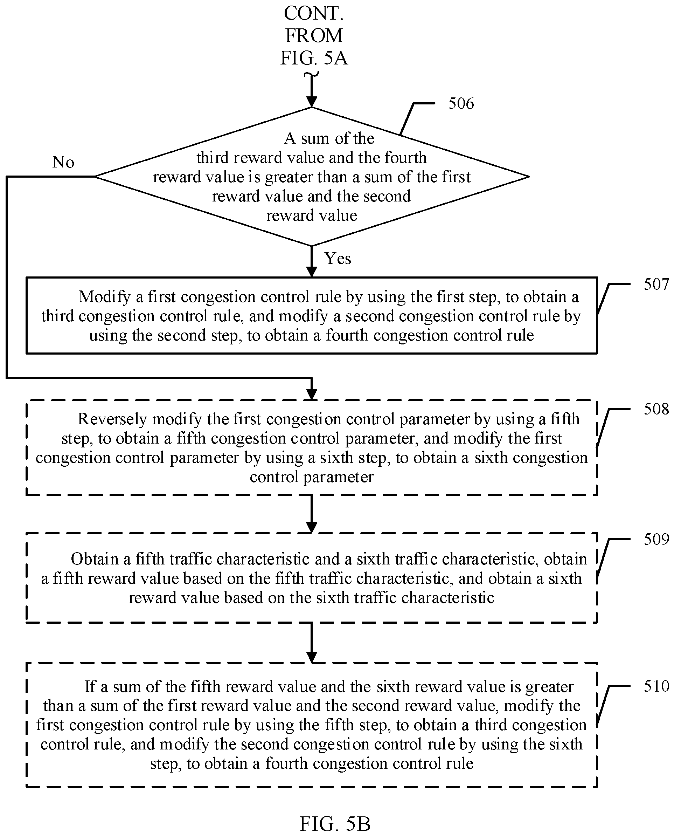

Refer to FIG. 5A and FIG. 5B. FIG. 5A and FIG. 5B are a schematic flowchart of a congestion control method according to another embodiment of this application.

In Step 501, the network device obtains a first congestion control parameter and a second congestion control parameter.

A first congestion control rule is configured for the network device. When the network device needs to control traffic of the first device, the network device may obtain the first congestion control parameter based on a first initial traffic characteristic collected from the first device according to the first congestion control rule. A second congestion control rule is further configured for the network device. When the network device needs to control traffic of the second device, the network device may obtain the second congestion control parameter based on a second initial traffic characteristic collected from the second device according to the second congestion control rule.

Optionally, when there is no traffic characteristic of a previous period, the network device may use a preset traffic characteristic as an initial traffic characteristic, or the network device does not obtain the first congestion control parameter and the second congestion control parameter in a current period and waits for a next period to obtain a traffic characteristic of the current period as the initial traffic characteristic. The network device obtains the first congestion control parameter based on a traffic characteristic of the first device in the current period to control traffic of the first device in the next period, and obtains the second congestion control parameter based on a traffic characteristic of the second device in the current period to control traffic of the second device in the next period.

The first congestion control rule may be an AI model. The first congestion control rule may also be a formula. In actual application, either can be selected as the first congestion control rule.

In Step 502, the network device obtains a first traffic characteristic and a second traffic characteristic, and the network device obtains a first reward value based on the first traffic characteristic and a second reward value based on the second traffic characteristic.

The network device obtains the first traffic characteristic and the second traffic characteristic. The first traffic characteristic includes statistical information generated when the first device forwards traffic in a first period based on the first congestion control parameter. The network device obtains a first reward value based on the first traffic characteristic. The second traffic characteristic includes statistical information generated when the second device forwards traffic in the first period based on the second congestion control parameter. The network device obtains a second reward value based on the second traffic characteristic. A method for obtaining the reward value is similar to the method for obtaining the reward value in Step 302 in FIG. 3A. Details are not described herein again.

In Step 503, the network device obtains a first running value and a second running value of the first device, obtains a third running value and a fourth running value of the second device, and determines whether an average of differences is less than a target threshold.

The network device obtains the first running value and the second running value of the first device, obtains the third running value and the fourth running value of the second device, and determines whether the average of the differences is less than the target threshold.

The average of the differences is an average of a first difference and a second difference, where the first difference is a difference between the first running value and the second running value, and the second difference is a difference between the third running value and the fourth running value.

Optionally, the network device may adjust an initial congestion control parameter only according to the first congestion control rule, where the adjusting the initial congestion control parameter only according to the first congestion control rule means that the network device adjusts, not by using a step, a congestion control parameter that is obtained by the network device according to the first congestion control rule, and the network device directly uses the congestion control parameter that is obtained according to the first congestion control rule as a parameter for the first device to control traffic forwarding. Before the network device modifies the first congestion control parameter by using a first step, to obtain the second congestion control parameter, the network device may count a quantity of consecutive adjustments to the initial congestion control parameter by the network device only according to the first congestion control rule.

Description of the running value and the target threshold is similar to description in Step 303 in FIG. 3A. Details are not described herein again.

In Step 504, if the average of the differences is less than the target threshold, the network device forward modifies the first congestion control parameter by using the first step, to obtain the third congestion control parameter, and the network device forward modifies the second congestion control parameter by using a second step, to obtain the fourth congestion control parameter.

If the average of the differences is less than the target threshold, the network device forward modifies the first congestion control parameter by using the first step, to obtain the third congestion control parameter, and the network device forward modifies the second congestion control parameter by using the second step, to obtain the fourth congestion control parameter.

The forward modification is merely used to distinguish from reverse modification described below, and does not mean that the first congestion control parameter can only be added forward. For example, the first congestion control parameter is 100, and the first step is 20. After the network device forward modifies the first congestion control parameter by using the first step, the second congestion control parameter may be 80 or 120. To facilitate understanding of the congestion control method in this embodiment, an example in which the second congestion control parameter is 120 is used for description in this embodiment.

Optionally, the first step and the second step are percentages.

Optionally, the target threshold may be adjusted based on network fluctuations of the first device. When a network fluctuation of the first device is small, that is, a traffic change of the first device is small, the network device decreases the target threshold. When a network fluctuation of the first device is large, that is, a traffic change of the first device is large, the network device increases the target threshold.

Optionally, when the network device counts the quantity of consecutive adjustments to the initial congestion control parameter by the network device only according to the first congestion control rule, the network device may not obtain the first running value and the second running value of the first device, and the network device may determine whether the quantity of consecutive adjustments is greater than a specified threshold N. When the network device determines that the quantity of consecutive adjustments is greater than the specified threshold N, the network device performs the step of forward modifying the first congestion control parameter by using the first step, to obtain the second congestion control parameter.

Optionally, when the network device counts the quantity of consecutive adjustments to the initial congestion control parameter by the network device only according to the first congestion control rule, and the network device obtains the first running value, the second running value, the third running value, and the fourth running value, provided that one condition is met, the network device performs the step of forward modifying the first congestion control parameter by using the first step, to obtain the second congestion control parameter. The following cases are included.

When the network device determines that the difference between the first running value and the second running value is greater than the target threshold, and the network device determines that the quantity of consecutive adjustments is greater than the specified threshold N, the network device performs the step of forward modifying the first congestion control parameter by using the first step, to obtain the second congestion control parameter.

When the network device determines that the difference between the first running value and the second running value is less than the target threshold, and the network device determines that the quantity of consecutive adjustments is less than the specified threshold N, the network device performs the step of forward modifying the first congestion control parameter by using the first step, to obtain the second congestion control parameter.

When the network device determines that the difference between the first running value and the second running value is less than the target threshold, and the network device determines that the quantity of consecutive adjustments is greater than the specified threshold N, the network device performs the step of forward modifying the first congestion control parameter by using the first step, to obtain the second congestion control parameter.

Optionally, Step 503 may not be performed. When Step 503 is not performed, after the network device obtains the first congestion control parameter, without determining whether the average of the differences is less than the target threshold, the network device directly forward modifies the first congestion control parameter by using the first step, to obtain the second congestion control parameter, and forward modifies the second congestion control parameter by using the second step, to obtain the fourth congestion control parameter.

In Step 505, the network device obtains a third traffic characteristic and a fourth traffic characteristic, and the network device obtains a third reward value based on the third traffic characteristic and a fourth reward value based on the fourth traffic characteristic.

After the network device obtains the third congestion control parameter by forward modifying the first congestion control parameter by using the first step, the network device may obtain the third traffic characteristic. The third traffic characteristic includes statistical information generated when the first device forwards traffic in a second period based on the third congestion control parameter, and the third traffic characteristic may be specifically statistical information of the first device, statistical information of a port of the first device, or statistical information of a queue of the first device. After the network device obtains the third traffic characteristic, the network device may obtain the third reward value based on the obtained third traffic characteristic. An algorithm of the third reward value is similar to the algorithm of the first reward value in Step 302 in the FIG. 3A. The third traffic characteristic may be a value of the first device at a moment in the second period, or may be a value obtained after processing. For example, the third traffic characteristic may be an average of the first device in the second period.

After the network device obtains the fourth congestion control parameter by forward modifying the second congestion control parameter by using the second step, the network device may obtain the fourth traffic characteristic. The fourth traffic characteristic includes statistical information generated when the second device forwards traffic in the second period based on the fourth congestion control parameter, and the fourth traffic characteristic may be specifically statistical information of the second device, statistical information of a port of the second device, or statistical information of a queue of the second device. After the network device obtains the fourth traffic characteristic, the network device may obtain the fourth reward value based on the obtained fourth traffic characteristic. An algorithm of the fourth reward value is similar to the algorithm of the first reward value in Step 302 in FIG. 3A. The fourth traffic characteristic may be a value of the second device at a moment in the second period, or may be a value obtained after processing. For example, the fourth traffic characteristic may be an average of the second device in the second period.

Optionally, when the network device is the first device, the network device directly delivers the third congestion control parameter to a forwarding chip, so that the forwarding chip controls the traffic forwarded by the first device in the second period. The network device sends the fourth congestion control parameter to the second device, so that the second device controls the traffic forwarded based on the fourth congestion control parameter.

Optionally, when the network device is the second device, the network device directly delivers the fourth congestion control parameter to the forwarding chip, so that the forwarding chip controls the traffic forwarded by the second device in the second period. The network device sends the third congestion control parameter to the first device, so that a third device controls traffic forwarding based on the third congestion control parameter.

Optionally, when the network device is a device other than the first device and the second device, after the network device obtains the third congestion control parameter and the fourth congestion control parameter, the network device sends the third congestion control parameter to the first device, so that the first device controls, based on the third congestion control parameter, the traffic forwarded by the first device in the second period, and the network device further sends the fourth congestion control parameter to the second device, so that the second device controls, based on the fourth congestion control parameter, the traffic forwarded by the second device in the second period.

In Step 506, the network device determines whether a sum of the third reward value and the fourth reward value is greater than a sum of the first reward value and the second reward value.

In Step 507, if the sum of the third reward value and the fourth reward value is greater than the sum of the first reward value and the second reward value, the network device modifies the first congestion control rule by using the first step, to obtain a third congestion control rule, and modifies the second congestion control rule by using the second step, to obtain a fourth congestion control rule.

Optionally, when the network device determines that the sum of the third reward value and the fourth reward value is greater than the sum of the first reward value and the second reward value, the network device does not need to first perform the step of modifying the first congestion control rule by using the first step, to obtain the third congestion control rule, and modifying the second congestion control rule by using the second step, to obtain the fourth congestion control rule. Instead, the network device continues to forward modify the third congestion control parameter by using the third step, to obtain a fifth congestion control parameter, and forward modify the fourth congestion control parameter by using a fourth step, to obtain a sixth congestion control parameter. The network device obtains a fifth traffic characteristic, where the fifth traffic characteristic includes statistical information generated when the first device forwards traffic in the third period based on the fifth congestion control parameter. The network device obtains a sixth traffic characteristic, where the sixth traffic characteristic includes statistical information generated when the second device forwards traffic in the third period based on a sixth congestion control parameter. The network device obtains a fifth reward value based on the fifth traffic characteristic. The network device obtains a sixth reward value based on the sixth traffic characteristic. If a sum of the fifth reward value and the sixth reward value is greater than the sum of the third reward value and the fourth reward value, the network device continues to forward modify the fifth congestion control parameter by using a fifth step, to obtain a seventh congestion control parameter, and the network device forward modify the sixth congestion control parameter by using a sixth step, to obtain an eighth congestion control parameter. The network device obtains a seventh traffic characteristic, where the seventh traffic characteristic includes statistical information generated when the first device forwards traffic in a fourth period based on the seventh congestion control parameter. The network device obtains an eighth traffic characteristic, where the eighth traffic characteristic includes statistical information generated when the second device forwards traffic in the fourth period based on the eighth congestion control parameter. The network device obtains a seventh reward value based on the seventh traffic characteristic. The network device obtains an eighth reward value based on the eighth traffic characteristic. By analogy, when a sum of a $(T+1)^{th}$ reward value and a $(T+2)^{th}$ reward value is less than a sum of a $(T-1)^{th}$ reward value and a $T^{th}$ reward value, where the $T^{th}$ reward value corresponds to a $T^{th}$ step and the $(T-1)^{th}$ reward value corresponds to a $(T-1)^{th}$ step, the network device uses a sum of all the steps from the first step, the third step, to the $(T-1)^{th}$ step as a first step, and modifies the first congestion control rule by using the first step, to obtain the third congestion control rule. The network device uses a sum of all the steps from the second step, the fourth step, to the $T^{th}$ step as a second step, and modifies the second congestion control rule by using the second step, to obtain the fourth congestion control rule.

In Step 508, if the sum of the third reward value and the fourth reward value is less than the sum of the first reward value and the second reward value, the network device reversely modifies the first congestion control parameter by using a fifth step, to obtain a fifth congestion control parameter, and modifies the first congestion control parameter by using a sixth step, to obtain a sixth congestion control parameter.

In Step 509, the network device obtains a fifth traffic characteristic and a sixth traffic characteristic, and the network device obtains a fifth reward value based on the fifth traffic characteristic and a sixth reward value based on the sixth traffic characteristic.

After the network device obtains the fifth congestion control parameter by reversely modifying the first congestion control parameter by using the third step, the network device may obtain the fifth traffic characteristic. The fifth traffic characteristic includes statistical information generated when the first device forwards traffic in a third period based on the fifth congestion control parameter, and the fifth traffic characteristic may be specifically statistical information of the first device, statistical information of a port of the first device, or statistical information of a queue of the first device. After the network device obtains the third traffic characteristic, the network device may obtain the fifth reward value based on the obtained fifth traffic characteristic. An algorithm of the fifth reward value is similar to the algorithm of the first reward value in Step 302 in FIG. 3A. The fifth traffic characteristic may be a value of the first device at a moment in the third period, or may be a value obtained after processing. For example, the fifth traffic characteristic may be an average of the first device in the third period.

After the network device obtains the sixth congestion control parameter by reversely modifying the second congestion control parameter by using the fourth step, the network device may obtain the sixth traffic characteristic. The sixth traffic characteristic includes statistical information generated when the second device forwards traffic in the third period based on the sixth congestion control parameter, and the sixth traffic characteristic may be specifically statistical information of the second device, statistical information of a port of the second device, or statistical information of a queue of the second device. After the network device obtains the sixth traffic characteristic, the network device may obtain the sixth reward value based on the obtained sixth traffic characteristic. An algorithm of the sixth reward value is similar to the algorithm of the first reward value in Step 302 in FIG. 3A. The sixth traffic characteristic may be a value of the second device at a moment in the third period, or may be a value obtained after processing. For example, the sixth traffic characteristic may be an average of the second device in the third period.

In Step 510, if a sum of the fifth reward value and the sixth reward value is greater than the sum of the first reward value and the second reward value, the network device modifies the first congestion control rule by using the fifth step, to obtain a third congestion control rule, and modifies the second congestion control rule by using the sixth step, to obtain a fourth congestion control rule.

Optionally, similar to Step 507, when the network device determines that the sum of the fifth reward value and the sixth reward value is greater than the sum of the first reward value and the second reward value, the network device does not need to first perform the step of modifying the first congestion control rule by using the fifth step, to obtain the third congestion control rule, and modifying the second congestion control rule by using the sixth step, to obtain the fourth congestion control rule. Instead, the network device continues to reversely modify the fifth congestion control parameter by using a seventh step, to obtain a seventh congestion control parameter, and reversely modify the sixth congestion control parameter by using an eighth step, to obtain the eighth congestion control parameter.

The foregoing describes the congestion control method in embodiments of this application, and the following describes a congestion control apparatus according to an embodiment of this application.

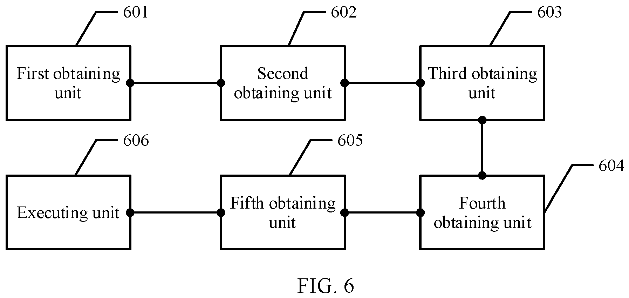

Refer to FIG. 6. FIG. 6 is a schematic diagram of a structure of a congestion control apparatus according to an embodiment of this application.

A first obtaining unit 601 is configured to obtain a first traffic characteristic, where the first traffic characteristic includes statistical information generated when a first device forwards traffic in a first period based on a first congestion control parameter, and the first congestion control parameter is obtained according to a first congestion control rule.

A second obtaining unit 602 is configured to obtain a first reward value based on the first traffic characteristic.

A third obtaining unit 603 is configured to modify the first congestion control parameter by using a first step, to obtain a second congestion control parameter.

A fourth obtaining unit 604 is configured to obtain a second traffic characteristic, where the second traffic characteristic includes statistical information generated when the first device forwards traffic in a second period based on the second congestion control parameter.

A fifth obtaining unit 605 is configured to obtain a second reward value based on the second traffic characteristic.

An executing unit 606 is configured to perform corresponding processing if the second reward value is greater than the first reward value.

In this embodiment, after the first congestion control parameter is obtained according to the first congestion control rule, the first obtaining unit 601 may obtain the first traffic characteristic, where the first traffic characteristic includes the statistical information generated when the first device forwards the traffic in the first period based on the first congestion control parameter, and the first congestion control parameter is obtained according to the first congestion control rule. The second obtaining unit 602 may obtain the first reward value based on the first traffic characteristic. After the first congestion control parameter is modified by using the first step, the third obtaining unit 603 may obtain the second congestion control parameter. The fourth obtaining unit 604 may obtain the second traffic characteristic, where the second traffic characteristic includes the statistical information generated when the first device forwards the traffic in the second period based on the second congestion control parameter. The fifth obtaining unit 605 may obtain the second reward value based on the second traffic characteristic. If the second reward value is greater than the first reward value, the executing unit 606 performs the corresponding processing. The third obtaining unit 603 modifies the first congestion control parameter by using the first step, and obtains the second congestion control parameter based on which a larger reward value is obtained. Because the second reward value is greater than the first reward value, the second congestion control parameter is superior to the first congestion control parameter. In this case, the congestion control apparatus optimizes an inference result that is obtained according to the first congestion control rule. Therefore, scenario generalization of the first congestion control rule is improved.

In this embodiment, operations performed by the units of the congestion control apparatus are similar to those described in the embodiment shown in FIG. 2, and details are not described herein again.

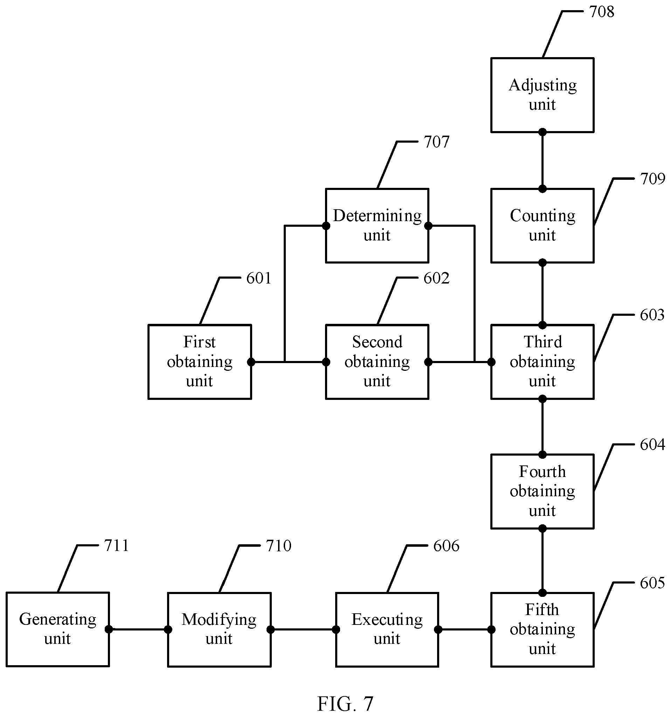

Refer to FIG. 7, FIG. 7 is a schematic diagram of a structure of the congestion control apparatus according to another embodiment of this application.

Based on the congestion control apparatus shown in FIG. 6, the congestion control apparatus provided in this application further includes:
optionally, the first obtaining unit 601 is further configured to obtain a first running value and a second running value of the first device.

The congestion control apparatus further includes:

a determining unit 707, configured to determine whether a difference between the first running value and the second running value is less than a target threshold, where
the third obtaining unit 603 is specifically configured to: if the difference is less than the target threshold, perform the step of modifying the first congestion control parameter by using the first step, to obtain the second congestion control parameter.

Optionally, the congestion control apparatus further includes:

an adjusting unit 708, configured to adjust an initial congestion control parameter; and
a counting unit 709, configured to count a quantity of consecutive adjustments to the initial congestion control parameter, where
the third obtaining unit 603 is specifically configured to: if the quantity of consecutive adjustments is greater than a preset threshold N, perform the step of modifying the first congestion control parameter by using the first step, to obtain the second congestion control parameter, and
the first congestion control parameter is obtained by adjusting the initial congestion control parameter for N consecutive times according to the first congestion control rule.

Optionally, a first formula includes: Q=A*B.

Optionally, the first congestion control rule is a first formula, and the first formula is:
Q=F(A, B), where Q is a congestion control parameter, A is a rate, B is a specified latency, and F(A, B) is a function related to A and B.

Optionally, the fifth obtaining unit 605 is further configured to modify the first formula by using the first step, to obtain a second formula.

Optionally, the fifth obtaining unit 605 is further configured to obtain a third congestion control parameter based on the second traffic characteristic according to the second formula.

The third congestion control parameter is used by the first device to control traffic forwarding.

Optionally, the first step is a percentage.

Optionally, the second formula is:

$$Q=A*B*(1+C),$$

where C is the first step.

Optionally, the executing unit 606 is specifically configured to forward modify the second congestion control parameter by using a second step, so as to obtain the third congestion control parameter.

The executing unit 606 is specifically configured to obtain a third traffic characteristic, where the third traffic characteristic includes statistical information generated when the first device forwards traffic in a third period based on the third congestion control parameter.

The executing unit 606 is specifically configured to obtain a third reward value based on the third traffic characteristic.

Optionally, the third obtaining unit 603 is further configured to: if the third reward value is less than the second reward value, reversely modify the second congestion control parameter by using a third step, to obtain a fourth congestion control parameter.

The fourth obtaining unit 604 is further configured to obtain a fourth traffic characteristic, where the fourth traffic characteristic includes statistical information generated when the first device forwards traffic in a fourth period based on the fourth congestion control parameter.

The fifth obtaining unit 605 is further configured to obtain a fourth reward value based on the fourth traffic characteristic.

Optionally, the congestion control apparatus further includes:

a modifying unit 710, configured to: if the fourth reward value is greater than the second reward value, modify the first congestion control rule by using the third step and the first step, to obtain a second congestion control rule.

Optionally, the congestion control apparatus further includes:

a generating unit 711, configured to generate a new congestion control parameter of the first device based on the fourth traffic characteristic according to the second congestion control rule, where the new congestion control parameter is used by the first device to control traffic forwarding.

Optionally, the second step is greater than the first step.

Optionally, the first obtaining unit 601 is further configured to obtain a fifth traffic characteristic, where the fifth traffic characteristic includes statistical information generated when a second device forwards traffic in the first period based on a fifth congestion control parameter, and the fifth congestion control parameter is obtained according to a third congestion control rule.

The second obtaining unit 602 is further configured to obtain a fifth reward value based on the fifth traffic characteristic.

The third obtaining unit 603 is further configured to modify the fifth congestion control parameter by using a fourth step, to obtain a sixth congestion control parameter.

The fourth obtaining unit 604 is further configured to obtain a sixth traffic characteristic, where the sixth traffic characteristic includes statistical information generated when the second device forwards traffic in the second period based on the sixth congestion control parameter.

The fifth obtaining unit 605 is further configured to obtain a sixth reward value based on the sixth traffic characteristic.

The executing unit 606 is further configured to perform the corresponding processing if a sum of the sixth reward value and the second reward value is greater than a sum of the fifth reward value and the first reward value.

Optionally, an executing unit 706 is specifically configured to modify the third congestion control rule by using the fourth step.

The executing unit 606 is specifically configured to modify the first congestion control rule by using the first step.

Optionally, the executing unit 706 is specifically configured to modify the second congestion control parameter by using the second step, so as to obtain the third congestion control parameter.

The executing unit 606 is specifically configured to obtain the third traffic characteristic, where the third traffic characteristic includes the statistical information generated when the first device forwards the traffic in the third period based on the third congestion control parameter.

The executing unit 606 is specifically configured to obtain the third reward value based on the third traffic characteristic.

The executing unit 606 is specifically configured to modify the sixth congestion control parameter by using a fifth step, so as to obtain a seventh congestion control parameter.

The executing unit 606 is specifically configured to obtain a seventh traffic characteristic, where the seventh traffic characteristic includes statistical information generated when the second device forwards traffic in the third period based on the seventh congestion control parameter.

The executing unit 606 is specifically configured to obtain a seventh reward value based on the seventh traffic characteristic.

In this embodiment, operations performed by the units of the congestion control apparatus are similar to those described in the embodiments shown in FIG. 2, FIG. 3 A, FIG. 3B, FIG. 4 A, and FIG. 4B. Details are not described herein again.

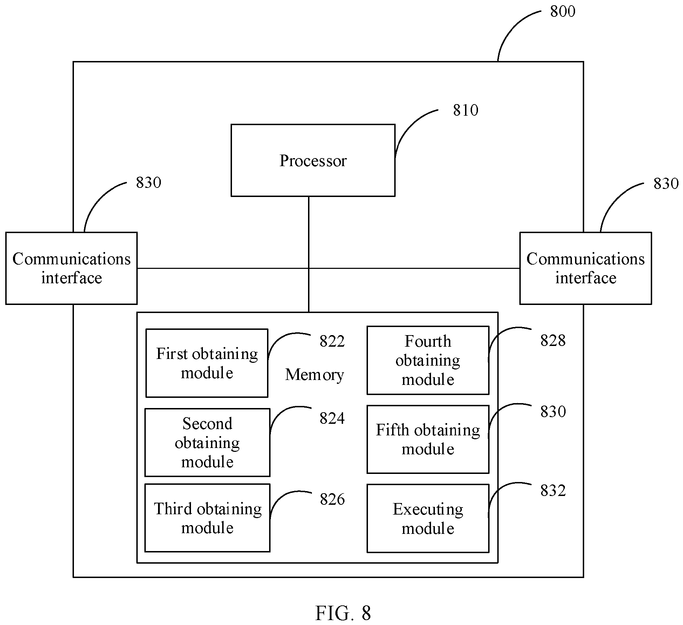

The foregoing describes the congestion control apparatus in embodiments of this application, and the following describes a congestion control device according to an embodiment of this application. Refer to FIG. 8. FIG. 8 is a schematic diagram of a structure of a congestion control device according to an embodiment of this application.

As shown in FIG. 8, the congestion control device 800 includes a processor 810, a memory coupled to the processor 810, and a communications interface 830. The congestion control device 800 may be the network device, the first device, or the second device in FIG. 1. The processor 810 may be a central processing unit (central processing unit, CPU), a network processor (network processor, NP), or a combination of a CPU and an NP. The processor may alternatively be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 810 may be one processor, or may include a plurality of processors. The memory may include a volatile memory (volatile memory), for example, a random access memory (random access memory, RAM); or the memory may include a non-volatile memory (non-volatile memory), for example, a read-only memory (read-only memory, ROM), a flash memory (flash memory), a hard disk drive (hard disk drive, HDD), or a solid-state drive (solid-state drive, SSD); or the memory may include a combination of the foregoing types of memories. The memory stores computer-readable instructions, and the computer-readable instructions include a plurality of software modules, for example, a first obtaining module 822, a second obtaining module 824, a third obtaining module 826, a fourth obtaining module 828, a fifth obtaining module 830, and an executing module 832.

After executing each software module, the processor 810 may perform a corresponding operation based on an indication of each software module. In this embodiment, an operation performed by one software module is actually an operation performed by the processor 810 based on the indication of the software module.

The first obtaining module 822 may be configured to obtain a first traffic characteristic, where the first traffic characteristic includes statistical information generated when the first device forwards traffic in a first period based on a first congestion control parameter, and the first congestion control parameter is obtained according to a first congestion control rule.

The second obtaining module 824 is configured to obtain a first reward value based on the first traffic characteristic.

The third obtaining module 826 is configured to modify the first congestion control parameter by using a first step, to obtain a second congestion control parameter.

The fourth obtaining module 828 is configured to obtain a second traffic characteristic, where the second traffic characteristic includes statistical information generated when the first device forwards traffic in a second period based on the second congestion control parameter.

The fifth obtaining module 830 is configured to obtain a second reward value based on the second traffic characteristic.

The executing module 832 is configured to perform corresponding processing if the second reward value is greater than the first reward value.

In addition, after executing the computer-readable instructions stored in the memory, the processor 810 may perform, according to indications of the computer-readable instructions, all operations that can be performed by the network device, the first device, or the second device, for example, the operations performed by the network device in the embodiments corresponding to FIG. 2, FIG. 3A, FIG. 3B, FIG. 4A, and FIG. 4B.

In the several embodiments provided in this application, it should be understood that the disclosed system, apparatus, and method may be implemented in other manners. For example, the foregoing apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one location, or may be distributed on a plurality of network units. Some or all of the units may be selected depending on actual requirements to achieve the objectives of the solutions in the embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and is sold or used as an independent product, the integrated unit may be stored in a computer-readable storage medium. Based on such an understanding, the technical solutions of this application essentially, or the part contributing to the conventional art, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application.

## Claims

1. A congestion control method, comprising:

   obtaining a first traffic characteristic, wherein the first traffic characteristic comprises statistical information generated when a first device forwards traffic in a first period based on a first congestion control parameter, and the first congestion control parameter is obtained according to a first congestion control rule;
   obtaining a first reward value based on the first traffic characteristic;
   modifying the first congestion control parameter by using a first step, to obtain a second congestion control parameter;
   obtaining a second traffic characteristic, wherein the second traffic characteristic comprises statistical information generated when the first device forwards traffic in a second period based on the second congestion control parameter;
   obtaining a second reward value based on the second traffic characteristic; and
   performing corresponding processing if the second reward value is greater than the first reward value.

2. The method according to claim 1, wherein the method further comprises:

   obtaining a first running value and a second running value of the first device;
   determining whether a difference between the first running value and the second running value is less than a target threshold; and
   if the difference is less than the target threshold, performing the step of modifying the first congestion control parameter by using a first step, to obtain a second congestion control parameter.

3. The method according to claim 1, wherein the method further comprises:

   adjusting an initial congestion control parameter;
   counting a quantity of consecutive adjustments to the initial congestion control parameter; and
   if the quantity of consecutive adjustments is greater than a preset threshold N, performing the step of modifying the first congestion control parameter by using a first step, to obtain a second congestion control parameter, wherein the first congestion control parameter is obtained by adjusting the initial congestion control parameter for N+1 consecutive times according to the first congestion control rule.

4. The method according to any one of claims 1 to 3, wherein the first congestion control rule is a first formula, and the first formula is:

$$Q=F(A, B),$$

   wherein Q is a congestion control parameter, A is a rate, B is a specified latency, and F(A, B) is a function related to A and B.

5. The method according to claim 4, wherein the first formula is specifically:

$$Q=A*B.$$

6. The method according to claim 5, wherein the performing corresponding processing comprises:
   modifying the first formula by using the first step, to obtain a second formula.

7. The method according to claim 6, wherein the method further comprises:

   obtaining a third congestion control parameter based on the second traffic characteristic according to the second formula, wherein the third congestion control parameter is used by the first device to control traffic forwarding.

8. The method according to claim 7, wherein the first step is a percentage.

9. The method according to any one of claims 6 to 8, wherein the second formula is:

$$Q=A*B*(1+C),$$

   wherein C is the first step.

10. The method according to any one of claims 1 to 3, wherein

the performing corresponding processing comprises:

forward modifying the second congestion control parameter by using a second step, to obtain a third congestion control parameter;
obtaining a third traffic characteristic, wherein the third traffic characteristic comprises statistical information generated when the first device forwards traffic in a third period based on the third congestion control parameter; and
obtaining a third reward value based on the third traffic characteristic.

11. The method according to claim 10, wherein the method further comprises:

if the third reward value is less than the second reward value, reversely modifying the second congestion control parameter by using a third step, to obtain a fourth congestion control parameter;
obtaining a fourth traffic characteristic, wherein the fourth traffic characteristic comprises statistical information generated when the first device forwards traffic in a fourth period based on the fourth congestion control parameter; and
obtaining a fourth reward value based on the fourth traffic characteristic.

12. The method according to claim 11, wherein the method further comprises:
if the fourth reward value is greater than the second reward value, modifying the first congestion control rule by using the third step and the first step, to obtain a second congestion control rule.

13. The method according to claim 12, wherein after the performing corresponding processing, the method further comprises:
generating a new congestion control parameter of the first device based on the fourth traffic characteristic according to the second congestion control rule, wherein the new congestion control parameter is used by the first device to control traffic forwarding.

14. The method according to any one of claims 10 to 13, wherein the second step is greater than the first step.

15. The method according to claim 1, wherein the performing corresponding processing comprises:

obtaining a fifth traffic characteristic, wherein the fifth traffic characteristic comprises statistical information generated when a second device forwards traffic in the first period based on a fifth congestion control parameter, and the fifth congestion control parameter is obtained according to a third congestion control rule;
obtaining a fifth reward value based on the fifth traffic characteristic;
modifying the fifth congestion control parameter by using a fourth step, to obtain a sixth congestion control parameter;
obtaining a sixth traffic characteristic, wherein the sixth traffic characteristic comprises statistical information generated when the second device forwards traffic in the second period based on the sixth congestion control parameter;
obtaining a sixth reward value based on the sixth traffic characteristic; and
performing the corresponding processing if a sum of the sixth reward value and the second reward value is greater than a sum of the fifth reward value and the first reward value.

16. The method according to claim 15, wherein the performing the corresponding processing comprises:

modifying the third congestion control rule based on the fourth step; and
modifying the first congestion control rule based on the first step.

17. The method according to claim 15, wherein the performing the corresponding processing comprises:

modifying the second congestion control parameter by using a second step, to obtain a third congestion control parameter;
obtaining a third traffic characteristic, wherein the third traffic characteristic comprises statistical information generated when the first device forwards traffic in a third period based on the third congestion control parameter;
obtaining a third reward value based on the third traffic characteristic;
modifying the sixth congestion control parameter by using a fifth step, to obtain a seventh congestion control parameter;
obtaining a seventh traffic characteristic, wherein the seventh traffic characteristic comprises statistical information generated when the second device forwards traffic in the third period based on the seventh congestion control parameter; and
obtaining a seventh reward value based on the seventh traffic characteristic.

18. A congestion control apparatus, comprising:

a first obtaining unit, configured to obtain a first traffic characteristic, wherein the first traffic characteristic comprises statistical information generated when a first device forwards traffic in a first period based on a first congestion control parameter, and the first congestion control parameter is obtained according to a first congestion control rule;

a second obtaining unit, configured to obtain a first reward value based on the first traffic characteristic;

a third obtaining unit, configured to modify the first congestion control parameter by using a first step, to obtain a second congestion control parameter;

a fourth obtaining unit, configured to obtain a second traffic characteristic, wherein the second traffic characteristic comprises statistical information generated when the first device forwards traffic in a second period based on the second congestion control parameter;

a fifth obtaining unit, configured to obtain a second reward value based on the second traffic characteristic; and

an executing unit, configured to perform corresponding processing if the second reward value is greater than the first reward value.

19. The apparatus according to claim 18, wherein

the first obtaining unit is further configured to obtain a first running value and a second running value of the first device; and
the apparatus further comprises:

a determining unit, configured to determine whether a difference between the first running value and the second running value is less than a target threshold, wherein
the third obtaining unit is specifically configured to: if the difference is less than the target threshold, perform the step of modifying the first congestion control parameter by using the first step, to obtain the second congestion control parameter.

20. The apparatus according to claim 18, wherein the apparatus further comprises:

an adjusting unit, configured to adjust an initial congestion control parameter; and
a counting unit, configured to count a quantity of consecutive adjustments to the initial congestion control parameter, wherein
the third obtaining unit is specifically configured to: if the quantity of consecutive adjustments is greater than a preset threshold N, perform the step of modifying the first congestion control parameter by using the first step, to obtain the second congestion control parameter; and
the first congestion control parameter is obtained by adjusting the initial congestion control parameter for N+1 consecutive times according to the first congestion control rule.

21. The apparatus according to any one of claims 18 to 20, wherein the first congestion control rule is a first formula, and the first formula is:

$$Q=F(A, B),$$

wherein Q is a congestion control parameter, A is a rate, B is a specified latency, and F(A, B) is a function related to A and B.

22. The apparatus according to any one of claims 18 to 20, wherein

the executing unit is specifically configured to forward modify the second congestion control parameter by using a second step, to obtain a third congestion control parameter;
the executing unit is specifically configured to obtain a third traffic characteristic, wherein the third traffic characteristic comprises statistical information generated when the first device forwards traffic in a third period based on the third congestion control parameter; and
the executing unit is specifically configured to obtain a third reward value based on the third traffic characteristic.

23. The apparatus according to claim 22, wherein

the third obtaining unit is further configured to: if the third reward value is less than the second reward value, reversely modify the second congestion control parameter by using a third step, to obtain a fourth congestion control parameter;
the fourth obtaining unit is further configured to obtain a fourth traffic characteristic, wherein the fourth traffic characteristic comprises statistical information generated when the first device forwards traffic in a fourth period based on the fourth congestion control parameter; and
the fifth obtaining unit is further configured to obtain a fourth reward value based on the fourth traffic characteristic.

24. The apparatus according to claim 23, wherein the apparatus further comprises:
a modifying unit, configured to: if the fourth reward value is greater than the second reward value, modify the first congestion control rule by using the third step and the first step, to obtain a second congestion control rule.

25. The apparatus according to any one of claims 18 to 24, wherein
the apparatus further comprises:
a generating unit, configured to generate a new congestion control parameter of the first device based on the fourth traffic characteristic according to the second congestion control rule, wherein the new congestion control parameter is used by the first device to control traffic forwarding.

26. The apparatus according to any one of claims 18 to 25, wherein

the first obtaining unit is further configured to obtain a fifth traffic characteristic, wherein the fifth traffic characteristic comprises statistical information generated when a second device forwards traffic in the first period based on a fifth congestion control parameter, and the fifth congestion control parameter is obtained according to a third congestion control rule;
the first obtaining unit is further configured to obtain a fifth reward value based on the fifth traffic characteristic;
the third obtaining unit is further configured to modify the fifth congestion control parameter by using a fourth step, to obtain a sixth congestion control parameter;
the fourth obtaining unit is further configured to obtain a sixth traffic characteristic, wherein the sixth traffic characteristic comprises statistical information generated when the second device forwards traffic in the second period based on the sixth congestion control parameter;
the fifth obtaining unit is further configured to obtain a sixth reward value based on the sixth traffic characteristic; and
the executing unit is further configured to perform the corresponding processing if a sum of the sixth reward value and the second reward value is greater than a sum of the fifth reward value and the first reward value.

27. The apparatus according to claim 26, wherein

the executing unit is specifically configured to modify the third congestion control rule based on the fourth step; and
the executing unit is specifically configured to modify the first congestion control rule based on the first step.

28. A congestion control device, comprising a memory and a processor, wherein

the memory is configured to store a program; and
the processor is configured to execute the program stored in the memory, to perform the method according to any one of claims 1 to 17.

29. A computer storage medium, wherein the computer storage medium stores instructions, and when the instructions are run on a computer, the computer is enabled to perform the method according to any one of claims 1 to 17.

30. A computer program product, wherein when the computer program product is run on a computer, the computer is enabled to perform the method according to any one of claims 1 to 17.

102

101

103

FIG. 1

```
Obtain a first traffic characteristic, and obtain a first reward
value based on the first traffic characteristic data
```
201

```
Modify a first congestion control parameter by using a first
step, to obtain a second congestion control parameter
```
202

```
Obtain a second traffic characteristic, and obtain a second
reward value based on the second traffic characteristic
```
203

```
If the second reward value is greater than the first reward
value, perform corresponding processing
```
204

FIG. 2

FIG. 3A

301 — Obtain a first congestion control parameter

302 — A network device obtains a first traffic characteristic, and obtains a first reward value based on the first traffic characteristic

303 — The network device obtains a first running value and a second running value of a first device, and determines whether a difference between the first running value and the second running value is less than a target threshold

304 — If the difference is less than the target threshold, the network device forward modifies the first congestion control parameter by using a first step, to obtain a second congestion control parameter

305 — The network device obtains a second traffic characteristic, and the network device obtains a second reward value based on the second traffic characteristic

306 — The second reward value is greater than the first reward value

307 — Modify a first formula by using the first step, to obtain a second formula, and obtain a congestion control parameter according to the second formula

Yes

No

308 — Reversely modify the first congestion control parameter by using a second step, to obtain a third congestion control parameter

309 — The network device obtains a third traffic characteristic, and the network device obtains a third reward value based on the third traffic data

TO FIG. 3B

TO FIG. 3B

TO FIG. 3B

CONT.
FROM
FIG. 3A

CONT.
FROM
FIG. 3A

CONT.
FROM
FIG. 3A

311

Modify the first formula by using the second step, to obtain a second formula, and obtain a new congestion control parameter according to the second formula

310

The third reward value is greater than the first reward value

Yes

No

312

Forward modify the first congestion control parameter by using a third step, to obtain a fourth congestion control parameter

313

The network device obtains a fourth traffic characteristic, and the network device obtains a fourth reward value based on the fourth traffic data

315

Modify the first formula by using the third step, to obtain a second formula, and obtain a new congestion control parameter according to the second formula

314

The fourth reward value is greater than the first reward value

Yes

No

316

Reversely modify the first congestion control parameter by using a fourth step, to obtain a fifth congestion control parameter

317

The network device obtains a fifth traffic characteristic, and the network device obtains a fifth reward value based on the fifth traffic data

319

Modify the first formula by using the fourth step, to obtain a second formula, and obtain a new congestion control parameter according to the second formula

318

The fifth reward value is greater than the first reward value

Yes

No

320

A probability of returning to Step 312 is F percent, and a probability of returning to Step 301 is G percent

FIG. 3B

| | |
|---|---|
| Obtain a first congestion control parameter | 401 |
| Obtain a first traffic characteristic, and obtain a first reward value based on the first traffic characteristic | 402 |
| Obtain a first running value and a second running value of a first device, and determine whether a difference between the first running value and the second running value is less than a target threshold | 403 |
| If the difference between the first running value and the second running value is less than the target threshold, forward modify a first low threshold by using a first step, to obtain a second forward low threshold | 404 |
| Obtain a second traffic characteristic, and obtain a second reward value based on the second traffic characteristic | 405 |
| Forward modify a first high threshold by using a second step, to obtain a second forward high threshold | 406 |
| Obtain a third traffic characteristic, and obtain a third reward value based on the third traffic characteristic | 407 |
| Forward modify a first maximum marking probability by using a third step, to obtain a second forward maximum marking probability | 408 |

TO
FIG. 4B

FIG. 4A

CONT.
FROM
FIG. 4A

Obtain a fourth traffic characteristic, and obtain a fourth reward value based on the fourth traffic characteristic ⟋— 409

Reversely modify the first low threshold by using a fourth step, to obtain a second reverse low threshold ⟋— 410

Obtain a fifth traffic characteristic, and obtain a fifth reward value based on the fifth traffic characteristic ⟋— 411

Reversely modify the first high threshold by using a fifth step, to obtain a second reverse high threshold ⟋— 412

Obtain a sixth traffic characteristic, and obtain a sixth reward value based on the sixth traffic characteristic ⟋— 413

Reversely modify the first maximum marking probability by using a sixth step, to obtain a second reverse maximum marking probability ⟋— 414

Obtain a seventh traffic characteristic, and obtain a seventh reward value based on the seventh traffic characteristic ⟋— 415

Obtain a new initial traffic characteristic, and input the new initial traffic characteristic into an AI model for inference, to obtain an initial congestion control parameter ⟋— 416

FIG. 4B

Obtain a first congestion control parameter and a second congestion control parameter — 501

Obtain a first traffic characteristic and a second traffic characteristic, obtain a first reward value based on the first traffic characteristic, and obtain a second reward value based on the second traffic characteristic — 502

Obtain a first running value and a second running value of a first device, obtain a third running value and a fourth running value of a second device, and determine whether an average of differences is less than a target threshold — 503

If the average of the differences is less than the target threshold, forward modify the first congestion control parameter by using a first step, to obtain a third congestion control parameter, and forward modify the second congestion control parameter by using a second step, to obtain a fourth congestion control parameter — 504

Obtain a third traffic characteristic and a fourth traffic characteristic, obtain a third reward value based on the third traffic characteristic, and obtain a fourth reward value based on the fourth traffic characteristic — 505

TO
FIG. 5B

FIG. 5A

CONT.
FROM
FIG. 5A

506

A sum of the
third reward value and the fourth
reward value is greater than a sum of the first
reward value and the second
reward value

No

Yes

507

Modify a first congestion control rule by using the first step, to obtain a third congestion control rule, and modify a second congestion control rule by using the second step, to obtain a fourth congestion control rule

508

Reversely modify the first congestion control parameter by using a fifth step, to obtain a fifth congestion control parameter, and modify the first congestion control parameter by using a sixth step, to obtain a sixth congestion control parameter

509

Obtain a fifth traffic characteristic and a sixth traffic characteristic, obtain a fifth reward value based on the fifth traffic characteristic, and obtain a sixth reward value based on the sixth traffic characteristic

510

If a sum of the fifth reward value and the sixth reward value is greater than a sum of the first reward value and the second reward value, modify the first congestion control rule by using the fifth step, to obtain a third congestion control rule, and modify the second congestion control rule by using the sixth step, to obtain a fourth congestion control rule

FIG. 5B

First obtaining unit — 601

Second obtaining unit — 602

Third obtaining unit — 603

Executing unit — 606

Fifth obtaining unit — 605

Fourth obtaining unit — 604

FIG. 6

FIG. 7

800

810

Processor

830

Communications
interface

830

Communications
interface

First obtaining
module

822

Memory

Fourth
obtaining
module

828

Second
obtaining
module

824

Fifth obtaining
module

830

Third obtaining
module

826

Executing
module

832

FIG. 8

## INTERNATIONAL SEARCH REPORT

International application No.

**PCT/CN2020/113775**

### A. CLASSIFICATION OF SUBJECT MATTER

H04L 12/801(2013.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 拥塞, 控制, 参数, 流量, 统计, 特征, 步长, 修改, 调节, 调整, 上调, 下调, 回报, 阈值, congestion, control, parameter, flow, statistic, character, adjust, up, down, steplength, redound, feedback, threshold

### C. DOCUMENTS CONSIDERED TO BE RELEVANT

| Category* | Citation of document, with indication, where appropriate, of the relevant passages | Relevant to claim No. |
|---|---|---|
| A | US 2011149730 A1 (NEMETH, Gabor et al.) 23 June 2011 (2011-06-23) description, paragraphs [0042]-[0060] | 1-30 |
| A | CN 107079435 A (HUAWEI TECHNOLOGIES CO., LTD.) 18 August 2017 (2017-08-18) entire document | 1-30 |
| A | WO 2012097737 A1 (HUAWEI TECHNOLOGIES CO., LTD.) 26 July 2012 (2012-07-26) entire document | 1-30 |
| A | US 10257097 B1 (EMC IP HOLDING COMPANY LLC.) 09 April 2019 (2019-04-09) entire document | 1-30 |
| A | US 2014269326 A1 (GOOGLE INC.) 18 September 2014 (2014-09-18) entire document | 1-30 |
| A | WO 2017161566 A1 (HUAWEI TECHNOLOGIES CO., LTD.) 28 September 2017 (2017-09-28) entire document | 1-30 |
| A | NTT DOCOMO, INC. "Congestion Control for NR Sidelink" *3GPP TSG RAN WG1 #97 R1-1906210,* 17 May 2019 (2019-05-17), entire document | 1-30 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **27 November 2020** | **09 December 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

| International application No. |
|---|
| **PCT/CN2020/113775** |

**C.     DOCUMENTS CONSIDERED TO BE RELEVANT**

| Category* | Citation of document, with indication, where appropriate, of the relevant passages | Relevant to claim No. |
|---|---|---|
| A | 孔金生 等 (KONG, Jinsheng et al.). "网络拥塞的智能化适应控制方法 (Intelligent Adaptive Control Approach of Congestion Control for Computer Networks)" 系统工程与电子技术 (Systems Engineering and Electronics), Vol. 27, No. 7, 31 July 2005 (2005-07-31), entire document | 1-30 |

Form PCT/ISA/210 (second sheet) (January 2015)

## INTERNATIONAL SEARCH REPORT
### Information on patent family members

International application No.

**PCT/CN2020/113775**

| Patent document cited in search report | | | Publication date (day/month/year) | Patent family member(s) | | | Publication date (day/month/year) |
|---|---|---|---|---|---|---|---|
| US | 2011149730 | A1 | 23 June 2011 | WO | 2009146726 | A1 | 10 December 2009 |
| CN | 107079435 | A | 18 August 2017 | WO | 2016187807 | A1 | 01 December 2016 |
| WO | 2012097737 | A1 | 26 July 2012 | CN | 102104908 | A | 22 June 2011 |
| US | 10257097 | B1 | 09 April 2019 | US | 2019222520 | A1 | 18 July 2019 |
| US | 2014269326 | A1 | 18 September 2014 | WO | 2014150607 | A1 | 25 September 2014 |
| WO | 2017161566 | A1 | 28 September 2017 | BR | 112018069130 | A2 | 22 January 2019 |
| | | | | CN | 108476174 | A | 31 August 2018 |
| | | | | EP | 3410658 | A1 | 05 December 2018 |
| | | | | US | 2018375775 | A1 | 27 December 2018 |
| | | | | IN | 201827031168 | A | 16 November 2018 |

Form PCT/ISA/210 (patent family annex) (January 2015)

**REFERENCES CITED IN THE DESCRIPTION**

**Patent documents cited in the description**

- CN 201911223339